(19) Europäisches Patentamt
European Patent Office
Office européen des brevets

(11) **EP 3 456 689 A1**

(12) **EUROPEAN PATENT APPLICATION**
published in accordance with Art. 153(4) EPC

(43) Date of publication:
**20.03.2019 Bulletin 2019/12**

(51) Int Cl.:
*C02F 3/12* (2006.01)   *B01D 65/02* (2006.01)
*B01D 65/08* (2006.01)   *C02F 1/44* (2006.01)
*C02F 3/00* (2006.01)

(21) Application number: **17795970.7**

(22) Date of filing: **27.04.2017**

(86) International application number:
**PCT/JP2017/016647**

(87) International publication number:
**WO 2017/195609 (16.11.2017 Gazette 2017/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.05.2016   JP 2016093853**

(71) Applicants:
• **Fuji Electric Co., Ltd.**
**Kawasaki-shi,**
**Kanagawa (JP)**
• **Chuo University**
**Hachioji-shi, Tokyo 192-0393 (JP)**

(72) Inventors:
• **HIRAOKA, Mutsuhisa**
**Kawasaki-shi,**
**Kanagawa 210-9530 (JP)**

• **TAGUCHI, Kazuyuki**
**Kawasaki-shi,**
**Kanagawa 210-9530 (JP)**
• **ITOKAWA, Kazuyoshi**
**Kawasaki-shi,**
**Kanagawa 210-9530 (JP)**
• **SATOU Masanori**
**Kawasaki-shi,**
**Kanagawa 210-9530 (JP)**
• **YAMAMURA, Hiroshi**
**Tokyo 112-8551 (JP)**
• **SUI, Pengzhe**
**Tokyo 112-8551 (JP)**

(74) Representative: **MERH-IP Matias Erny Reichl Hoffmann**
**Patentanwälte PartG mbB**
**Paul-Heyse-Strasse 29**
**80336 München (DE)**

(54) **WASTEWATER TREATMENT METHOD, WASTEWATER TREATMENT DEVICE, AND ACTIVE AGENT FOR TREATING WASTEWATER**

(57)    Provided is a waste water treatment method, in which, in a separation membrane activated sludge method, an influence on an original activated sludge treatment environment is small, clogging of a separation membrane is suppressed, and a long service life of the separation membrane and efficiency of waste water treatment equipment operation can be achieved, and a waste water treatment equipment therefor and an activator for waste water treatment.

In the waste water treatment method for introducing waste water containing an organic substance into a treatment tank and applying activated sludge treatment thereto, and performing solid-liquid separation of the waste water after the activated sludge treatment by using the separation membrane installed in the treatment tank to remove treated water, while dominating microorganisms for improving a state of clogging of the separation membrane, an activator containing a component for activating the microorganisms, and the activator having a particle size less than 10 $\mu$m in 30% or more of the number in total, and a particle size over 100 $\mu$m in the number less than 10% in total, is added to the waste water to be subjected to activated sludge treatment in the treatment tank. The microorganisms for improving the state of clogging of the separation membrane preferably contain *Bacillus* bacteria.

EP 3 456 689 A1

**Description**

**Technical Field**

The present invention relates to a waste water treatment method for applying activated sludge treatment to waste water containing an organic substance, such as domestic waste water and industrial waste water, along with performing membrane filtration to treat the waste water, a waste water treatment equipment therefor and an activator for the waste water treatment.

**Background Art**

As one of waste water treatment methods, a separation membrane activated sludge method (MBR: membrane bioreactor) is known, in which waste water containing an organic substance is introduced into a treatment tank and subjected to activated sludge treatment to remove the organic substance and the like, and then the resulting material is allowed to pass through a membrane module provided with a separation membrane such as a reverse osmotic membrane, an ultrafiltration membrane, a microfiltration membrane and a hollow fiber membrane to perform solid-liquid separation by applying filtration treatment of liquidborne microbes and other suspended solids (abbreviated as SS) thereto. In the separation membrane activated sludge method, the solid-liquid separation is performed by using the membrane module, and therefore the separation membrane activated sludge method has an advantage of capability of omitting a final settling pond to achieve size reduction of an equipment.

However, a problem has remained, in which the liquidborne microbes, other suspended solids (SS) and the like are gradually deposited on the membrane module by operation for a long time, and the separation membrane is clogged. A problem also has remained, in which, if the separation membrane is clogged, a rise of a transmembrane pressure, reduction of a filtration flux or the like is caused, and a running cost for preventing clogging, such as bubbling, backwash and chemical cleaning, is required, and furthermore the separation membranes should be finally exchanged, and if an exchange interval of the separation membranes is short, continuous operation is also disturbed, and therefore overall operating efficiency of a waste water treatment equipment is reduced. It has been recently revealed that a main cause of such clogging of the separation membrane is a deposit (including adhesive microorganisms, remains thereof or the like) containing glycoprotein produced by the microorganisms in activated sludge to exhibit adhesion so strong as non-peelable even by bubbling or backwash.

With regard to the separation membrane activated sludge method, for example, Patent Literature 1 described below discloses an attempt on solving a problem of clogging of a separation membrane by putting a small animal having excellent ability of preying on dispersible bacteria causative of clogging of the separation membrane into a treatment tank, and enhancing eating action thereof. Moreover, for example, Patent Literature 2 described below discloses an attempt on solving the problem of clogging of the separation membrane by providing microorganisms capable of reducing or inhibiting formation of a biofilm causative of clogging for the separation membrane.

On the other hand, in the sludge utilized in such activated sludge treatment, the microorganisms in the treatment tank are a main constituent, and are a flock of the microorganisms grown by applying an organic substance or the like in waste water as a substrate. Therefore, while the organic substance in the waste water is cleaned in the activated sludge treatment, an amount of sludge produced is also to be increased according to the cleaning. Moreover, the activated sludge treatment is not treatment in a closed system in which the microorganisms from the external world are not mixed at all in the microorganisms existing in the treatment tank, and is in a state in which the microorganisms that generally exist in the natural world are always mixed. Therefore, the microorganisms relating to biotreatment are of great variety, and have various characteristics and functions. Thus, the microorganisms dominated in the treatment tank are also different depending on the waste water as an object to be treated.

Accordingly, proposals have been made on improving efficiency of waste water treatment by using a technique for dominating bacilli having a high growth rate among the microorganisms in a waste water treatment environment to produce a large amount of an enzyme which degrades the organic substance, and such an art has been put into practical use. In this case, in order to dominate and maintain the bacilli in the treatment tank, an activator containing a silicon compound and a mineral is also added (see Patent literature 3 and 4 described below).

[Citation List]

[Patent Literature]

[Patent Literature 1]: JP-A-2007-260664

[Patent Literature 2]: JP-A-2013-510710
[Patent Literature 3]: JP-B-4826982
[Patent Literature 4]: WO-A-2011/136188

**Summary of Invention**

[Problems to Be Solved by the Invention]

However, with regard to a problem of clogging of a separation membrane in a separation membrane activated sludge method, the method in the Patent Literature 1 described above has had a risk in which a small animal excellent in ability of preying on dispersible bacteria is put in a treatment tank to prey on even microorganisms useful for activated sludge treatment, resulting in adversely compromising waste water treatment ability. Moreover, the method in the Patent Literature 2 described above also has had a risk in which the microorganisms capable of reducing or inhibiting formation of a biofilm causative of clogging are to be provided into the treatment tank, and therefore a growth balance of a population of microorganisms in the treatment tank is lost by presence thereof, resulting in adversely compromising the waste water treatment ability.

On the other hand, according to findings of the present inventors, when the technique for dominating the bacilli is applied to the separation membrane activated sludge method, a problem has remained, in which the activator for the bacilli contains minerals such as calcium and magnesium, and if the minerals stay in the treatment tank for a long time, a scale is produced in the separation membrane to aggravate clogging.

In view of the conventional technology described above, an object of the present invention is to provide a waste water treatment method in which, in the separation membrane activated sludge method, an influence on an original activated sludge treatment environment is minimized, clogging of the separation membrane is suppressed, and a long service life of the separation membrane and high efficiency of operation of the waste water treatment equipment can be achieved, as well as to provide a waste water treatment equipment therefor and an activator for waste water treatment.

[Means to Solve the Problems]

A waste water treatment method to be provided by the present invention is a waste water treatment method for introducing waste water containing an organic substance into a treatment tank and applying activated sludge treatment thereto, and performing solid-liquid separation of the waste water after the activated sludge treatment by using a separation membrane installed in the treatment tank to remove treated water, the waste water treatment method including adding, while dominating microorganisms for improving a state of clogging of the separation membrane, an activator containing a component for activating the microorganisms, and the activator having a particle size less than 10 $\mu$m in 30% or more of the number in total, and a particle size over 100 $\mu$m in the number less than 10% in total, to the waste water to be subjected to activated sludge treatment in the treatment tank.

According to the waste water treatment method to be provided by the present invention, the activated sludge treatment to the waste water is applied in the treatment tank, and simultaneously solid-liquid separation of the waste water after the activated sludge treatment is performed by using the separation membrane installed in the treatment tank to remove treated water. Therefore a settling tank is unnecessary, and an equipment configuration can be simplified. Moreover, the microorganisms for improving the state of clogging of the separation membrane are dominated, and the activator uniformed in a predetermined particle size is used as the activator of the microorganisms. Therefore, the microorganisms are effectively activated, and a component causative of clogging of the separation membrane can be efficiently reduced by an enzyme secreted by the microorganisms. Furthermore, the activator of the microorganisms does not stay in the treatment tank for a long time, and clogging of the separation membrane by scale formation caused by minerals such as calcium and magnesium contained in the activator is not aggravated. Thus, a long service life of the separation membrane and high efficiency of operation of the waste water treatment equipment can be realized.

In the waste water treatment method described above, the microorganisms preferably contain *Bacillus* bacteria. Thus, *Bacillus* bacteria cause secretion of at least protease or carbohydrase outside a bacterial cell, and therefore the component causative of clogging of the separation membrane can be further efficiently reduced by the enzyme.

Moreover, the activator preferably contains a silicon compound with poor solubility. Thus, the microorganisms such as *Bacillus* bacteria for improving the state of clogging of the separation membrane can be further effectively activated.

Moreover, the activator preferably further contains at least one kind selected from the group consisting of an iron compound, a magnesium compound, a calcium compound and a manganese compound. Thus, the microorganisms such as *Bacillus* bacteria for improving the state of clogging of the separation membrane can be further effectively activated.

Moreover, the activator preferably contains at least one kind of pulverized material selected from the group consisting of blast furnace slag, diatomaceous earth, perlite and cement. Thus, inexpensive materials such as the materials derived from a mineral can be utilized as the activator.

Moreover, the activator is preferably used by further combining a solubilizing agent of the silicon compound with the activator. Thus, the silicon component of the activator can further effectively act on the microorganisms such as *Bacillus* bacteria for improving the state of clogging of the separation membrane to promote activation thereof.

Moreover, it is preferable to measure enzyme activity derived from the microorganisms contained in the waste water in the treatment tank to control an amount of addition of the activator based on a measured value. Thus, the minerals causative of scale formation are not supplied without any necessity by adding the activator at desired timing according to a state of activity of the microorganisms such as *Bacillus* bacteria for improving the state of clogging of the separation membrane.

The enzyme activity refers to activity of protease and/or carbohydrase, and when an activity value thereof is less than a predetermined value, the activator is preferably added thereto. Thus, the activator can be added at a more exact time by further simply monitoring the state of activity of the microorganisms such as *Bacillus* bacteria for improving the state of clogging of the separation membrane.

Moreover, it is preferable to measure the state of clogging of the separation membrane to control the amount of addition of the activator based on a measured state of clogging of the separation membrane. Thus, the minerals causative of scale formation are not supplied without any necessity by adding the activator at desired timing according to the state of clogging of the separation membrane.

Moreover, an indicator showing the state of clogging of the separation membrane is taken as a water pressure and/or a water flow rate of the treated water subjected to solid-liquid separation by using the separation membrane, and when a value of the water pressure and/or the water flow rate is less than a predetermined value, the activator is preferably added thereto. Thus, the activator can be added at a more exact time by further simply monitoring the state of clogging of the separation membrane.

Moreover, it is preferable to measure the state of clogging of the separation membrane after applying backwash treatment or bubbling to the separation membrane. Thus, the state of clogging of the separation membrane can be more exactly monitored.

On the other hand, a first embodiment of the waste water treatment equipment to be provided by the present invention is a waste water treatment equipment for introducing waste water containing an organic substance into a treatment tank and applying activated sludge treatment thereto, and performing solid-liquid separation of the waste water after the activated sludge treatment by using a separation membrane installed in the treatment tank to remove treated water, including: a means for supplying an activator containing a component for activating microorganisms for improving a state of clogging of the separation membrane, and the activator having a particle size less than 10 μm in 30% or more of the number in total, and a particle size over 100 μm in the number less than 10% in total; a means for measuring enzyme activity derived from the microorganisms contained in the waste water in the treatment tank; and a control means for controlling an amount of supply of the activator into the waste water to be subjected to activated sludge treatment in the treatment tank based on a measured value thereof.

According to the first embodiment of the waste water treatment equipment to be provided by the present invention, the activated sludge treatment is applied to the waste water in the treatment tank, along with solid-liquid separation of the waste water after the activated sludge treatment is performed by using the separation membrane installed in the treatment tank to remove treated water, and therefore a settling tank is unnecessary, and the equipment configuration can be simplified. Moreover, the waste water treatment equipment has the means for supplying the activator of microorganisms for improving the state of clogging of the separation membrane, and the activator having a particle size less than 10 μm in 30% or more of the number in total, and a particle size over 100 μm in the number less than 10% in total, and therefore the microorganisms for improving the state of clogging of the separation membrane are effectively activated by supply of the activator, and the component causative of clogging of the separation membrane can be efficiently reduced by the enzyme secreted by the microorganisms. Furthermore, the activator of the microorganisms does not stay in the treatment tank for a long time, and clogging of the separation membrane by scale formation caused by the minerals such as calcium and magnesium contained in the activator is not aggravated. Furthermore, the waste water treatment equipment has the means for measuring enzyme activity derived from the microorganisms contained in the waste water in the treatment tank, and the control means for controlling the amount of supply of the activator into the waste water to be subjected to activated sludge treatment in the treatment tank based on the measured value thereof, and therefore the minerals causative of scale formation are not supplied without any necessity by adding the activator of the microorganisms at desired timing according to the state of activity of the microorganisms for improving the state of clogging of the separation membrane. Thus, a long service life of the separation membrane and high efficiency of operation of the waste water treatment equipment can be realized.

The means for measuring the enzyme activity derived from the microorganisms contained in the waste water in the treatment tank preferably includes a means for measuring activity of protease and/or carbohydrase. Thus, the activator can be added at a more exact time by further simply monitoring the state of activity of the microorganisms contained in the waste water in the portion treatment tank.

On the other hand, a second embodiment of the waste water treatment equipment to be provided by the present invention is a waste water treatment equipment for introducing waste water containing an organic substance into a treatment tank and applying activated sludge treatment thereto, and performing solid-liquid separation of the waste water after the activated sludge treatment by using a separation membrane installed in the treatment tank to remove treated water, including: a means for supplying an activator containing a component for activating microorganisms for improving a state of clogging of the separation membrane, and the activator having a particle size less than 10 $\mu$m in 30% or more of the number in total, and a particle size over 100 $\mu$m in the number less than 10% in total; a means for measuring a state of clogging of the separation membrane; and a control means for controlling an amount of supply of the activator into the waste water to be subjected to activated sludge treatment in the treatment tank based on a measured state of clogging of the separation membrane.

According to the second embodiment of the waste water treatment equipment to be provided by the present invention, the activated sludge treatment is applied to the waste water in the treatment tank, along with solid-liquid separation of the waste water after the activated sludge treatment is performed by using the separation membrane installed in the treatment tank to remove treated water, and therefore a settling tank is unnecessary, and the equipment configuration can be simplified. Moreover, the waste water treatment equipment has the means for supplying the activator of microorganisms for improving the state of clogging of the separation membrane, and the activator having a particle size less than 10 $\mu$m in 30% or more of the number in total, and a particle size over 100 $\mu$m in the number less than 10% in total, and therefore the microorganisms for improving the state of clogging of the separation membrane are effectively activated by supply of the activator, and the component causative of clogging of the separation membrane can be efficiently reduced by the enzyme secreted by the microorganisms. Furthermore, the activator of the microorganisms does not stay in the treatment tank for a long time, and clogging of the separation membrane by scale formation caused by the minerals such as calcium and magnesium contained in the activator is not aggravated. Furthermore, the waste water treatment equipment has the means for measuring the state of clogging of the separation membrane, and the control means for controlling the amount of supply of the activator into the waste water to be subjected to activated sludge treatment in the treatment tank based on the measured state of clogging of the separation membrane, and therefore the minerals causative of scale formation are not supplied without any necessity by adding the activator of the microorganisms at desired timing according to the state of clogging of the separation membrane. Thus, a long service life of the separation membrane and high efficiency of operation of the waste water treatment equipment can be realized.

The means for measuring the state of clogging of the separation membrane preferably includes a means for measuring a water pressure and/or a water flow rate of the treated water subjected to solid-liquid separation by using the separation membrane. Thus, the activator can be added at a more exact time by further simply monitoring the state of clogging of the separation membrane.

In the waste water treatment equipment described above, the microorganisms preferably contain *Bacillus* bacteria. Thus, *Bacillus* bacteria cause secretion of at least protease or carbohydrase outside the bacterial cell, and therefore the component causative of clogging of the separation membrane can be further efficiently reduced by the enzyme.

Moreover, the activator preferably contains the silicon compound with poor solubility. Thus, the microorganisms such as *Bacillus* bacteria for improving the state of clogging of the separation membrane can be further effectively activated.

Moreover, the activator preferably further contains at least one kind selected from the group consisting of an iron compound, a magnesium compound, a calcium compound and a manganese compound. Thus, the microorganisms such as *Bacillus* bacteria for improving the state of clogging of the separation membrane can be further effectively activated.

Moreover, the activator preferably contains at least one kind of pulverized material selected from the group consisting of blast furnace slag, diatomaceous earth, perlite and cement. Thus, the inexpensive materials such as the materials derived from the mineral can be utilized as the activator.

Moreover, the activator is preferably used by further combining a solubilizing agent of the silicon compound with the activator. Thus, the silicon component of the activator can further effectively act on the microorganisms such as *Bacillus* bacteria for improving the state of clogging of the separation membrane to promote activation thereof.

On the other hand, an activator for waste water treatment to be provided by the present invention is an activator for use in dominating microorganisms for improving a state of clogging of a separation membrane in a waste water treatment method for introducing waste water containing an organic substance into a treatment tank and applying activated sludge treatment thereto, and performing solid-liquid separation of the waste water after the activated sludge treatment by using the separation membrane installed in the treatment tank to remove treated water, and the activator contains a component for activating the microorganisms, and having a particle size less than 10 $\mu$m in 30% or more of the number in total, and a particle size over 100 $\mu$m in the number less than 10% in total.

According to the activator for waste water treatment to be provided by the present invention, the activator uniformed in the predetermined particle size is used as the activator for microorganisms useful in a separation membrane activated sludge method, and therefore the microorganisms are effectively activated, and a component causative of clogging of the separation membrane can be efficiently reduced by an enzyme secreted by the microorganisms. Moreover, the activator of the microorganisms does not stay in the treatment tank for a long time, and clogging of the separation membrane by scale formation caused by the minerals such as calcium and magnesium contained in the activator is not aggravated. Thus, a long service life of the separation membrane and high efficiency of operation of the waste water treatment equipment can be realized.

In the activator for waste water treatment as described above, the microorganisms preferably contain *Bacillus* bacteria. Thus, *Bacillus* bacteria cause secretion of at least protease or carbohydrase outside a bacterial cell, and therefore the component causative of clogging of the separation membrane can be further efficiently reduced by the enzyme.

Moreover, the activator preferably contains a silicon compound with poor solubility as the component for activating the microorganisms. Thus, the microorganisms such as *Bacillus* bacteria for improving the state of clogging of the separation membrane can be further effectively activated.

Moreover, the activator preferably further contains at least one kind selected from the group consisting of an iron compound, a magnesium compound, a calcium compound and a manganese compound as the component for activating the microorganisms. Thus, the microorganisms such as *Bacillus* bacteria for improving the state of clogging of the separation membrane can be further effectively activated.

Moreover, the activator is preferably obtained by pulverizing at least one kind selected from the group consisting of blast furnace slag, diatomaceous earth, perlite and cement. Thus, inexpensive materials such as the materials derived from a mineral can be utilized as the activator.

Moreover, the activator is preferably for a use in combination with the solubilizing agent of the silicon compound. Thus, the silicon component of the activator can further effectively act on the microorganisms such as *Bacillus* bacteria for improving the state of clogging of the separation membrane to promote activation thereof.

Moreover, the solubilizing agent preferably contains a cationic polymer for suppressing polymerization of silicon and/or the silicon compound.

[Advantageous Effects of Invention]

The present invention can provide a waste water treatment method in which, in a separation membrane activated sludge method, an influence on an original activated sludge treatment environment is minimized, clogging of a separation membrane is suppressed, and a long service life of the separation membrane and high efficiency of operation of the waste water treatment equipment can be realized, as well as to provide a waste water treatment equipment therefor and an activator for waste water treatment.

**Brief Description of Drawings**

Fig. 1 is a schematic configuration diagram showing one example of a waste water treatment equipment for performing a waste water treatment method according to the present invention.

Fig. 2 shows a procedure for measuring activity of protein degradation enzyme (protease) contained in waste water in a treatment tank as one example of a means for measuring enzyme activity derived from microorganisms such as *Bacillus* bacteria.

Fig. 3 shows a procedure for measuring activity of carbohydrase (amylase) contained in waste water in a treatment tank as another example of a means for measuring enzyme activity derived from microorganisms such as *Bacillus* bacteria.

Fig. 4 is a control flowchart showing an example of control in a control device of the waste water treatment equipment shown in Fig. 1, in which Fig. 4A is a control flowchart showing one example of control based on a state of clogging of a separation membrane, and Fig. 4B is a control flowchart showing one example of control based on enzyme activity derived from microorganisms contained in waste water in a treatment tank.

Fig. 5 is a diagram showing results obtained by examining sludge degradation performance by bacilli in Test Example 1.

Fig. 6 is a diagram showing results obtained by measuring a particle size distribution of a pulverized product A of blast furnace slag in Test Example 3.

Fig. 7 is a diagram showing results obtained by measuring a particle size distribution of a pulverized product B of blast furnace slag in Test Example 3.

Fig. 8 is a diagram showing results obtained by measuring a particle size distribution of a conventional commercially available activator in Test Example 3.

Fig. 9 is a diagram showing results obtained by examining an effect of an activator on protease production of bacilli A in Test Example 5.

Fig. 10 is a diagram showing results obtained by examining an effect of an activator on protease production of bacilli B in Test Example 5.

Fig. 11 is a diagram showing results obtained by examining an effect of an activator on carbohydrase production of bacilli A in Test Example 6.

Fig. 12 is a diagram showing results obtained by examining an effect of an activator on carbohydrase production of bacilli B in Test Example 6.

Fig. 13 is a diagram showing results obtained by examining an effect of a mineral component on growth of bacilli A in Test Example 7.

Fig. 14 is a diagram showing results obtained by examining an effect of a mineral component on growth of bacilli B in Test Example 7.

Fig. 15 is a diagram showing results obtained by examining an effect of a mineral component on protease production of bacilli A in Test Example 8.

Fig. 16 is a diagram showing results obtained by examining an effect of a mineral component on protease production of bacilli B in Test Example 8.

Fig. 17 is a diagram showing results obtained by examining an effect of a mineral component on carbohydrase production of bacilli A in Test Example 9.

Fig. 18 is a diagram showing results obtained by examining an effect of a mineral component on carbohydrase production of bacilli B in Test Example 9.

Fig. 19 is a diagram showing results of measuring water quality of inflow specimen water and treated water in Test Example 10.

Fig. 20 is a diagram showing results obtained by examining a state of clogging of a membrane in operational condition of each of conditions No. 1 (bacilli domination) and No. 4 (standard activated sludge) by using a flat membrane as a kind of a membrane module in Test Example 10.

Fig. 21 is a diagram showing results obtained by examining a state of clogging of a membrane in operational conditions of each of conditions No. 2 (bacilli domination) and No. 3 (standard activated sludge) by using a hollow fiber membrane as a kind of a membrane module in Test Example 10.

Fig. 22 is a diagram showing results obtained by examining a degree of recovery of filtration resistance when tap water cleaning or chemical cleaning is applied to a membrane causing clogging of the membrane in operational conditions of each of conditions No. 2 (bacilli domination) and No. 3 (standard activated sludge) by using a hollow fiber membrane as a kind of a membrane module in Test Example 10.

## Description of Embodiments

Hereinafter, embodiments of the present invention will be described with reference to drawings.

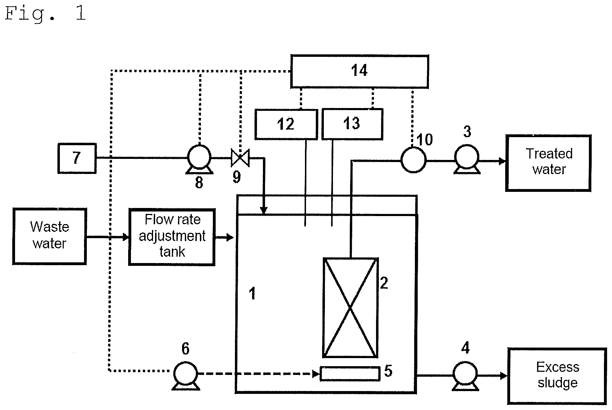

Fig. 1 is a schematic configuration diagram showing one example of a waste water treatment equipment for performing a waste water treatment method according to the present invention. The waste water treatment equipment is provided with a treatment tank 1 for applying activated sludge treatment to waste water, and a membrane module 2 installed in the treatment tank 1, and is the waste water treatment equipment according to a so-called separation membrane activated sludge method. The waste water from which foreign matters are removed in a pretreatment step is introduced into the treatment tank 1 through a flow rate adjustment tank, and subjected to the activated sludge treatment through residence in the treatment tank 1 for a predetermined period of time. The waste water after the treatment is sucked by a suction pump 3 through a pipe communicating with the membrane module 2, and a liquid portion subjected to solid-liquid separation by using the separation membrane installed in the membrane module 2 is removed as treated water. Excess sludge is discharged outside a system by a sludge removal pump 4 when necessary.

The waste water serving as a treatment object is not particularly limited as long as the waste water containing nitrogen or an organic substance is applied. Specific examples thereof include domestic waste water and waste water from a cereal starch manufacturing industry, a dairy product manufacturing industry, an edible meat center, a sugar manufacturing industry, a livestock products manufacturing industry, livestock farming, a meat products manufacturing industry, an edible meat ham and sausage manufacturing industry, a fishery paste products manufacturing industry, a seafood products manufacturing industry, a manufacturing industry in organic chemical industry and a manufacturing industry in inorganic chemical industry.

The treatment tank 1 is not particularly limited as long as activated sludge treatment can be applied thereto in the treatment tank in which activated sludge containing microorganisms stays or is put, and a pollution component of waste water is degraded by the microorganisms in the activated sludge, and removed. For example, the treatment tank 1 may be an aeration tank using aerobic microorganisms such as ammonia oxidizing bacteria and nitrite oxidizing bacteria, or an intermittent aeration tank using aerobic microorganisms such as nitrite oxidizing bacteria, and anaerobic microorganisms such as denitrifying bacteria.

As a separation membrane used in the membrane module 2, if the membrane is a general filtration membrane, all the membranes can be used. Specific examples thereof include a reverse-osmosis (RO) membrane, an ultrafiltration (UF) membrane, a microfiltration (MF) membrane and a hollow fiber (HF) membrane. Moreover, specific examples of a material of the filtration membrane include polyacrylonitrile, polyimide, polyethersulfone, polyphenylenesulfidesulfone, polytetrafluoroethylene, polyfluorovinylidene, polypropylene and polyethylene. Moreover, a form of the membrane module 2 is not particularly limited, and specific examples thereof include a hollow fiber membrane module, a flat membrane type module, a spiral type module and a tube type module.

In the embodiment described above, a diffuser plate 5 is provided in a bottom portion inside the treatment tank 1 and below the membrane module 2, in which aeration treatment is configured to be applied to the waste water to be treated in the treatment tank 1 by supplying air from a blower 6 to the diffuser plate 5. An aim of the aeration treatment is to supply oxygen to the microorganisms in the activated sludge in the tank, but also plays a role of excluding foreign matters comparatively weakly adhered to the membrane module 2 by bubbling action thereof, or also a role of preventing such foreign matters from adhering to the membrane module 2.

Moreover, an activator for improving activity of the microorganisms for improving a state of clogging of the separation membrane as described later is configured to be supplied from an activator supply tank 7 to the waste water in the treatment tank 1 by an activator feed pump 8. Then, an activator feed adjustment valve 9 is provided on the way of the pipe, and an amount of supply of the activator is configured to be adjusted by opening and closing the valve.

Moreover, a sensor 10 is provided on the way of the pipe communicating with the membrane module 2, and a water pressure and/or a water flow rate of treated water subjected to solid-liquid separation by using the separation membrane is configured to be monitored. More specifically, specific examples of the sensor include a pressure sensor, a filtration flowmeter, an ultrasonic flowmeter, and a means for measuring weight of treated water per unit time to convert a measured value into a water flow rate.

(Activator)

Hereinafter, the activator used in the present invention will be described.

The activator only needs to be a material containing a component for activating the microorganisms for improving the state of clogging of the separation membrane, and particularly preferably is a material containing a silicon compound. Thus, the silicon component can cause activation of the microorganisms by promotion of growth of the microorganisms for improving the state of clogging of the separation membrane, for example, the microorganisms such as *Bacillus* bacteria, by improving resistance of the microorganisms under an adverse environment, by promoting enzyme secretion from the microorganisms, or the like.

The activator is preferably a material further containing at least one kind selected from the group consisting of the iron compound, the magnesium compound, the calcium compound and the manganese compound. Thus, an iron component, a magnesium component, a calcium component and/or a manganese component can further effectively cause activation of the microorganisms by promoting growth of the microorganisms for improving the state of clogging of the separation membrane, for example, the microorganisms such as *Bacillus* bacteria, by improving the resistance under the adverse environment, by promoting the enzyme secretion from the microorganisms, or the like.

Specific examples of the silicon compound include silicon dioxide, sodium silicate, calcium silicate and magnesium silicate. Specific examples of the iron compound include ferrous chloride, ferric chloride, ferrous sulfate, ferric sulfate, ferrous nitrate and ferric nitrate. Specific examples of the magnesium compound include magnesium chloride, magnesium sulfate, magnesium hydroxide and magnesium nitrate. Specific examples of the calcium compound include calcium chloride, calcium hydroxide, calcium oxide and calcium nitrate. Specific examples of the manganese compound include manganese chloride, manganese sulfate and manganese nitrate.

Moreover, the activator may contain other minerals in addition to the compounds described above. Specific examples thereof include an aluminum compound such as an aluminum salt, a nickel compound such as a nickel salt and a titanium compound such as a titanium salt.

The activator may be composed of a reagent containing the component described above, a composition thereof or the like. However, in order to reduce a treatment cost, materials derived from a mineral, an industrial by-product and the like are preferably used. Specific examples thereof include blast furnace slag, diatomaceous earth, perlite and cement.

The blast furnace slag is a by-product in a high temperature furnace process in iron and steel manufacture, contains a component contained in iron ore or a component of limestone or coke being an auxiliary material, and has been so far utilized in an application such as cement use, concrete use, asphalt use, soil improvement use and fertilizer use. As shown in Test Examples described later, the blast furnace slag contains at least the silicon component, the iron component, the calcium component, the magnesium component, the aluminum component and the manganese component. Then, at least the silicon component exists as the silicon compound with poor solubility.

The diatomaceous earth is a fossil deposit of a shell of a diatom. The diatomaceous earth has been so far utilized in an application, such as wall material use, tile material use, refractory brick use, filtering material use and deodorization use. As shown in Test Examples described later, the diatomaceous earth contains at least the silicon component, the iron component, the calcium component, the magnesium component, the aluminum component and the manganese component. Then, at least the silicon component exists as the silicon compound with poor solubility.

The perlite is a burned foam of a volcanic rock containing glass, such as pearlstone, obsidian and pitchstone. The perlite has been so far utilized in an application, such as soil improvement use, thermal insulation use, filtering material use and fertilizer use. As shown in Test Examples described later, the perlite contains at least the silicon component, the iron component, the calcium component, the magnesium component, the aluminum component and the manganese component. Then, at least the silicon component exists as the silicon compound with poor solubility.

The cement has been used so far as a material of concrete and mortar, and contains clinker formed by mixing a raw material such as limestone, clay, silica and iron and calcining the mixture. As shown in Test Examples described later, the cement contains at least the silicon component, the iron component, the calcium component, the magnesium component and the aluminum component. Then, at least the silicon component exists as the silicon compound with poor solubility.

In addition, according to findings of the present inventors, the materials derived from the mineral and the like are generally the materials with poor solubility, and even if such materials are added to the treatment tank as the activator, an amount which can be utilized by the microorganisms is significantly small among the components, and it has been hard to maintain that a suitable amount is appropriately supplied for the microorganisms for improving the state of clogging of the separation membrane, for example, the microorganisms such as *Bacillus* bacteria. Moreover, there has been a problem in which the materials are easily accumulated in the treatment tank, and the scale is produced in the separation membrane by the minerals such as calcium and magnesium gradually eluted therefrom to aggravate clogging.

In the present invention, as the activator, a material having a particle size less than 10 $\mu$m in 30% or more of the number in total, and a particle size over 100 $\mu$m in the number less than 10% in total is used. A material having a particle size less than 10 $\mu$m in 50% or more of the number in total and a particle size over 80 $\mu$m in the number less than 10% in total is further preferably used, and a material having a particle size less than 10 $\mu$m in 90% or more of the number in total and a particle size over 60 $\mu$m in the number less than 10% in total is still further preferably used. Further, a material having a particle size of 0.2 $\mu$m or less in 1% or less is preferable, and a material without containing a particle size of 0.2 $\mu$m or less is further preferably used. The component of the activator can effectively act on the microorganisms for improving the state of clogging of the separation membrane, for example, the microorganisms such as *Bacillus* bacteria by using such a particle size to promote activation thereof. Moreover, the activator does not stay in the treatment tank for a long time, and clogging of the separation membrane by scale formation is prevented from being aggravated. Moreover, for example, in comparison with a typical membrane pore size of 0.2 pm, a particle size having a size equal to or smaller than the typical membrane pore size is prevented from being contained. Thus, penetration into a membrane pore and clogging can be prevented. For example, the activator having the predetermined particle size can be prepared by pulverization by using an airflow pulverizer such as a jet mill or an impact pulverizer such as a power mill. After pulverization, the resulting material may be sieved when necessary to obtain a material having a desired particle size by screening. A particle size distribution can be measured by a system in which a particle size is estimated by a scatter pattern of scattered light when particles are irradiated with laser light by a laser diffraction and scattering method, or the like. For example, the particle size distribution can be measured by a laser diffraction scattering type particle size distribution measuring apparatus ("Microtrac MT3000", NIKKISO CO., LTD.) or the like.

In the present invention, an operational effect by the activator having the predetermined particle size can be achieved by using the activator in such a manner that individual particles of the activator (particle having a particle size mainly less than 10 $\mu$m: having a particle size less than 10 $\mu$m in 30% or more of the number in total, preferably having a particle size less than 10 $\mu$m in 50% or more of the number in total, and further preferably having a particle size less than 10 $\mu$m in 90% or more of the number in total) are well dispersed in the treatment tank to be brought into contact with the microorganisms in the activated sludge, and at the same time, as a whole form of the activator, well dispersed in the treatment tank to be discharged over the part on the treated water side after treatment. Thus, unless such a use form is adversely affected, the activator having the predetermined particle size may be appropriately dispersed into liquid, formed into granules, or tablets, and may be provided as a form other than powder.

The activator having the predetermined particle size may be used in combination with other activation effective substances. Thus, when the materials derived from the mineral or the like are used, an insufficient material as the component required for activation can be supplemented. Specific examples of the silicon compound include silicon dioxide, sodium silicate, calcium silicate and magnesium silicate. Specific examples of the iron compound include ferrous chloride, ferric chloride, ferrous sulfate, ferric sulfate, ferrous nitrate and ferric nitrate. Specific examples of the magnesium compound include magnesium chloride, magnesium sulfate, magnesium hydroxide and magnesium nitrate. Specific examples of the calcium compound include calcium chloride, calcium hydroxide, calcium oxide and calcium nitrate. Specific examples of the manganese compound include manganese chloride, manganese sulfate and manganese nitrate.

The activator having the predetermined particle size may be used in combination with the solubilizing agent of the silicon compound. Thus, the silicon component of the activator can still further effectively act on the microorganisms for improving the state of clogging of the separation membrane, for example, the microorganisms such as *Bacillus* bacteria, to promote activation thereof. Moreover, an effect of solubilization by the solubilizing agent of the silicon compound is also remarked to the activator having the predetermined particle size.

The solubilizing agent of the silicon compound will be described below.

(1) Silicon compound

As a form of the silicon compound contained in the mineral or the like, silicic acid and silicic acid salt are known. The silicic acid is a generic term for a compound consisting of silicon, oxygen and hydrogen as represented by a chemical formula $[SiO_x(OH)_{4-2x}]_n$, and includes, as a material confirmed in the natural world, orthosilicic acid ($H_4SiO_4$), metasilicic acid ($H_2SiO_3$), metadisilicic acid ($H_2Si_2O_5$) or the like. The silicic acid salt is a compound containing an anion having a structure in which the compound has one or more silicon atoms as a center, and electronegative ligands surround the atoms, and is also referred to as silicate. A large amount of the mineral in the natural world exists as a silicate mineral. Addition of the silicate mineral thereto is inexpensive and simple as a source of supply of silicon in a waste water treatment process dominating the microorganisms such as *Bacillus* bacteria. However, the silicate mineral exists in the form of being polymerized as the structure of silicon, and therefore the silicate mineral is insoluble.

More specifically, olivine, garnet and the like are referred to as a nesosilicate mineral, and have a tetrahedron monomer structure of $[SiO_4]^{4-}$. Vesuvianite, epidote and the like are referred to as a sorosilicate mineral, and have a tetrahedron dimer structure of $[Si_2O_7]^{6-}$. Beryl, tourmaline and the like are referred to as a cyclosilicate mineral, and have a cyclic structure of $[Si_nO_{3n}]^{2n-}$. Pyroxene and the like are referred to as an isosilicate mineral, and have a single chain structure of $[Si_nO_{3n}]^{2n-}$. Amphibolite and the like are referred to as an isosilicate mineral, and have a double chain structure and a structure of $[Si_{4n}O_{11n}]^{6n-}$. Mica and a clay mineral are referred to as a phyllosilicate mineral, and have a layer structure of $[Si_{2n}O_{5n}]^{2n-}$. Quartz, feldspar, zeolite and the like are referred to as a tectosilicate mineral, and have a three-dimensional network structure of $[Al_xSi_yO_{2(x+y)}]^{x-}$.

The silicon compound contained in the mineral or the like is a polymer having the structure described above. Thus, solubility in water is increased by processing the polymer into a low molecular weight material or a monomer, and the resulting material effectively acts on the microorganisms such as *Bacillus* bacteria.

Polymerization of silicon herein progresses by continuous occurrence of a reaction of the formula (1) described below, for example. Accordingly, in order to suppress the polymerization of silicon and/or the silicon compound, it is effective to electrically neutralize a negative charge of $SiO^-$ serving as a base point of the reaction.

$$SiO^- + Si(OH)_4 \rightarrow Si\text{-}O\text{-}Si(OH)_3 + OH^- \cdots \qquad (1)$$

(2) Solubilizing agent

The solubilizing agent only needs to be a material which can solubilize the silicon compound, and is not particularly limited. Specific examples thereof include a cationic polymer. A positive charge of the cationic polymer electrically can neutralize the negative charge of $SiO^-$ to suppress the polymerization of silicon and/or the silicon compound according to the formula (1) described above, for example. Thus, the silicon compound can be kept in a solubilized state in water or an aqueous solvent.

The cationic polymer is preferably a polymer having a cation, such as primary amine, secondary amine, tertiary amine and quaternary ammonium. Specific examples thereof include an allylamine hydrochloride polymer, an allylamine hydrochloride-diallylamine hydrochloride copolymer, a methyldiallylamine hydrochloride polymer and a diallyldimethylammonium chloride polymer.

In the present invention, in order to allow the activator having the predetermined particle size to effectively act on the microorganisms in the waste water and the activated sludge, the activator having the predetermined particle size is contained in a form containing the activator by preferably 50 to 100% by mass, further preferably 70 to 100% by mass, and still further preferably 90 to 100% by mass, in terms of a solid content.

Hereinafter, the waste water treatment method and the waste water treatment equipment according to the present invention will be described in more detail.

(Waste water treatment method)

Conventionally, in the waste water treatment equipment according to the separation membrane activated sludge method, clogging has been so far produced in the separation membrane of the membrane module with the passage of time of operation. Therefore, it has been required to perform backwash treatment by applying a water pressure from a treated water side reverse to a side during steady state operation on a regular basis to perform operation while excluding foreign matters adhered to the membrane module, or to measure a water pressure of treated water after solid-liquid separation, and if the water pressure is less than a predetermined value, to remove the membrane module and wash the module with a chemical, or finally to exchange the membrane modules.

In the waste water treatment method according to the present invention, in order to suppress clogging of the separation membrane to achieve a long service life of the separation membrane and to improve efficiency of operation of the waste water treatment equipment, while dominating the microorganisms for improving the state of clogging of the separation membrane, in addition to or in place of a part of such maintenance of the membrane module, the activator described above is added to the waste water to be subjected to the activated sludge treatment in the treatment tank, .

With regard to the microorganisms for improving the state of clogging of the separation membrane, it has been revealed from the recent research that a main cause of such clogging of the separation membrane is a deposit (including adhesive microorganisms, remains thereof or the like) containing glycoprotein produced by the microorganisms in the activated sludge to exhibit adhesion so strong as non-peelable even by bubbling or backwash. Then, the glycoprotein is a strong adhesive causative substance. Thus, the deposit strongly adhered to the separation membrane of the membrane module can be excluded by degrading and removing the glycoprotein to improve the state of clogging of the separation membrane. Specific examples of the microorganisms that can degrade and remove the glycoprotein include microorganisms belonging to genus *Bacillus* and microorganisms belonging to genus Bifidobacterium to secrete at least protease or carbohydrase outside the bacterial cell.

The microorganisms for improving the state of clogging of the separation membrane can also be obtained by screening the microorganisms which secrete at least protease or carbohydrase outside the bacterial cell from an existing population of microorganisms. For example, the microorganisms excellent in degradability of protein and degradability of carbohydrate can be screened by the simplified enzyme activity test as described below.

(1) Degradability of protein

Bacteria are linearly inoculated on a flat plate of an agar culture medium containing casein having a concentration of 0.2 to 1.0 w/w% and cultured. The agar culture medium containing casein is opaque to translucent. However, the case where a transparent belt is formed around a colony of the bacteria after growth of the bacteria exhibits degradability of protein (having the degradability of protein).

(2) Degradability of carbohydrate

Bacteria are linearly inoculated on a flat plate of an agar culture medium containing a soluble starch having a concentration of 0.2 to 1.0 w/w% and cultured, and after growth, an iodine solution is poured onto the flat plate. The case where a transparent belt without becoming blue is formed around a colony of the bacteria exhibits degradability of starch (having the degradability of starch).

Specifically, a *Bacillus methylotrophicus* CBMB205T (EU194897) strain, a *Bacillus subtilis subsp. subtilis* DSM 10T (AJ276351) strain, a *Bacillus subtilis subsp. subtilis* NBRC3009 strain, a *Bacillus subtilis subsp. subtilis* ATCC6051 strain or the like, each being *Bacillus* bacteria, can be used.

Moreover, *Bifidobacterium bifidum, Bifidobacterium breve, Bifidobacterium infantis* or the like, each being *Bifidobacterium* bacteria, can be used.

The microorganisms described above can be generally cultured, stored or subjected to bacterial cell separation or the like according to the method commonly used in *Bacillus* bacteria and *Bifidobacterium* bacteria. To take a nutrient medium as an example, the microorganisms can be cultured in a medium such as a Nutrient medium (0.3% meat extract, 0.5% peptone) or an LB medium (0.5% yeast extract, 1% peptone, 1% sodium chloride).

In the waste water treatment method according to the present invention, the microorganisms for improving the state of clogging of the separation membrane are dominated. "Dominated" means that the microorganisms are dominating in a biota in which the microorganisms inhabit inside the treatment tank 1. Whether or not the microorganisms are dominating can be known in such a manner that the biota in which the microorganisms inhabit inside the treatment tank 1 is randomly identified by determination of a 16SrDNA sequence, or the like to determine at what proportion the microorganisms belonging to objective species exist to other organism species, or at what proportion the microorganisms having objective properties are contained in the microorganisms belonging to the objective species by the simplified enzyme activity test described above or the like. Specifically, the microorganisms for improving the state of clogging of the separation membrane ordinarily exist in about $1 \times 10^7$ to $1 \times 10^{10}$ as the number of the microorganisms in 1 mL of the activated sludge in the treatment tank 1 in a dominated state.

A means for dominating the microorganisms for improving the state of clogging of the separation membrane in the treatment tank 1 is not particularly limited. Specific examples include a method in which, as seed bacteria, *Bacillus* bacteria and Bifidobacterium bacteria exemplified above are added to seed sludge to be put therein, or to waste water before flowing into the treatment tank 1, or to waste water after flowing into the treatment tank 1, and then treatment conditions in which the *Bacillus* bacteria and the Bifidobacterium bacteria are maintained are kept. More specifically, the microorganisms can be ensured to be dominating in the biota in which the microorganisms inhabit inside the treatment tank 1 by adding the microorganisms thereto in an early stage of waste water treatment operation, and then if the treatment conditions according to a conventional method are maintained, the system is formed into the state in which the microorganisms for improving the state of clogging of the separation membrane are dominated during a treatment period. Moreover, in excess sludge obtained after the microorganisms for improving the state of clogging of the separation membrane are dominated and waste water treatment is applied thereto, a balance of the biota in which the microorganisms are dominated is kept. Therefore, such excess sludge is obtained from other waste water treatment facilities, and the excess sludge may be newly added thereto as the seed sludge during starting of waste water treatment facilities in which the sludge is to be newly treated, or the like. Alternatively, when domination of the microorganisms for improving the state of clogging of the separation membrane is weakened, such seed bacteria and seed sludge may be added thereto as needed.

As waste water treatment conditions, the treatment only needs be applied according to the conventional method. Typically, for example, a concentration of activated sludge in the waste water (MLSS) to be treated in the treatment tank 1 is preferably controlled in the range of 2,000 mg/L to 2,500 mg/L, and in a pH to the vicinity of neutrality, namely, in the range of 6.5 to 7. Moreover, treatment for utilizing activity of the microorganisms (denitrifying bacteria, dephosphorization bacteria, denitrifying phosphorus-accumulating bacteria or the like) tending to have a preference for anaerobic conditions and treatment for utilizing activity of the microorganisms (nitrifying bacteria, yeast, Escherichia coli or the like) tending to have a preference for aerobic conditions may be performed stepwise, continuously or intermittently in the treatment tank 1. In this case, although depending on a nitrogen concentration, a phosphorus concentration or the like in the waste water, a redox potential under the anaerobic conditions is preferably controlled to be in the range of -150 mV to -200 mV, and a dissolved oxygen amount under the aerobic conditions is preferably controlled to be in the range of 2.0 mg/L to 3.5 mg/L. For example, in the waste water treatment equipment shown in Fig. 1, the control can be performed by adjusting supply of air from the diffuser plate 5. Moreover, in order to prevent ammonia being an odor component from remaining in the waste water in which the treatment for a predetermined time in the treatment tank 1 is completed, the treatment under the aerobic conditions in which the nitrifying bacteria act thereon is preferably performed in a final step to complete the treatment in the treatment tank 1.

Conventionally, as monitoring and control of the waste water in the treatment tank, a water quality such as a dissolved oxygen amount, a redox potential, a hydrogen ion concentration, a sludge concentration and an organic load amount has been so far applied as an indicator. In the waste water treatment equipment shown in Fig. 1, a measuring instrument used for monitoring and control in such a conventional indicator is represented by a measuring instrument 12. Moreover, a control device 14 for controlling operation based on the indicator or the like is provided.

The dissolved oxygen amount is an indicator for judging excess and deficiency of oxygen demand when the microorganisms in the activated sludge assimilate the organic substance as the substrate. Accordingly, if the dissolved oxygen in water in the treatment tank is judged to be deficient in the control device 14 based on the measured value of the dissolved oxygen amount by the measuring instrument 12, control of increasing an amount of aeration in the treatment tank can be performed by increasing the amount of operation of the blower 6 or opening an aeration adjustment valve (not shown, the same shall apply hereinafter), or performing both thereof according to the signal from the control device 14. On the other hand, if the dissolved oxygen is judged to be excessive, control of reducing the amount of aeration in the treatment tank can be performed by reducing the amount of operation of the blower 6 or tightening the aeration adjustment valve, or performing both thereof according to the signal from the control device 14. In addition, in the case of the latter control, aeration may be obviously completely stopped.

The redox potential or the hydrogen ion concentration (pH) is an indicator relating to nitrogen removal in the waste water in the treatment tank. More specifically, a nitrogen content in the waste water is oxidized from an ammonia ion to a nitrite ion and a nitrate ion by nitrifying bacteria or the like, and converted from a nitric acid ion into nitrogen by denitrifying bacteria or the like. As a result, the nitrogen content in the waste water is removed by being released from the treatment tank into a gas phase in the form of a nitrogen gas. When the ammonia ion is oxidized into the nitrite ion and the nitrate ion, liquidity becomes acid. Moreover, in the denitrifying bacteria for reducing the nitrate ion into the nitrogen gas, a function is known to be operative in an anaerobic environment. Thus, monitoring of an anaerobic degree of the waste water in the treatment tank by the redox potential or the hydrogen ion concentration serves as an indicator for judging whether or not nitrogen removal in the waste water is properly performed. Accordingly, if the anaerobic degree in the water in the treatment tank is judged to be deficient in the control device 14 based on the measured value of the redox potential or the hydrogen ion concentration by the measuring instrument 12, control of reducing the amount of aeration in the treatment tank can be performed by reducing the amount of operation of the blower 6 or tightening the aeration adjustment valve, or performing both thereof according to the signal from the control device 14. In addition, in this case, aeration may be obviously completely stopped. On the other hand, when the anaerobic conditions are desirably eliminated, control of increasing the amount of aeration in the treatment tank can be performed by increasing the amount of operation of the blower 6 or opening the aeration adjustment valve, or performing both thereof according to the signal from the control device 14.

The sludge concentration can be referred to as an amount of microorganisms relating to biotreatment of the waste water. Accordingly as the amount of microorganisms in the activated sludge is larger, a speed of assimilation of the organic substance in the waste water is increased, and therefore treatment efficiency is also enhanced by increasing the sludge concentration. However, if the sludge concentration is high, the amount of microorganisms is increased by the portion. Therefore, it is required to increase the amount of aeration, or to dissolve the sludge by self-oxidation. Moreover, in order to cover the sludge required for treatment with a total amount of sludge in the treatment tank, stable introduction of the organic substance is required, and thus a balance between the sludge concentration and the organic load amount becomes important in order to stably maintain efficiency of the biotreatment of the waste water. Accordingly, if the sludge concentration is judged to be excessive in the activity control device 14 based on the measured value of the sludge concentration and/or the organic load amount by the measuring instrument 12, control of reducing the sludge concentration by increasing the amount of operation of the sludge removal pump 4, reducing the organic load into the treatment tank 1, or both thereof can be performed according to the signal from the control device 14. On the other hand, the organic load amount is judged to be excessive to the sludge concentration, control of reducing the amount of operation of the sludge removal pump 4 and stopping the pump 4, increasing the organic load to be flowed into the treatment tank 1, or both thereof can be performed according to the signal from the control device 14.

In the present invention, the activator described above is added to the waste water in the treatment tank 1 through the activator feed pump 8 and the activator feed adjustment valve 9 from the activator supply tank 7 in such a waste water treatment process. As timing of addition, a predetermined amount may be added constantly continuously or intermittently with a predetermined interval, and an arbitrary amount may be added thereto as needed. Moreover, when domination of the microorganisms such as *Bacillus* bacteria is weakened, for example, when the number of objective microorganisms existing in the waste water in the treatment tank 1 is less than a predetermined threshold value, the activator in a predetermined amount may be configured to be added thereto. Alternatively, when the organic substance concentration in the waste water to be treated in the treatment tank 1 is more than the predetermined threshold value, the activator in the predetermined amount may be configured to be added thereto.

Moreover, in the waste water treatment equipment shown in Fig. 1, in addition to or in place of the control described above, enzyme activity derived from the microorganisms such as *Bacillus* bacteria contained in the waste water in the treatment tank 1 is measured, and the biotreatment of the waste water in the treatment tank 1 can be configured to be controlled based on the measured enzyme activity. Therefore, an enzyme activity measuring instrument 13 for measuring enzyme activity derived from the microorganisms such as *Bacillus* bacteria contained in the waste water in the treatment tank 1 is installed, and a measured value thereof is configured to be transmitted to the control device 14.

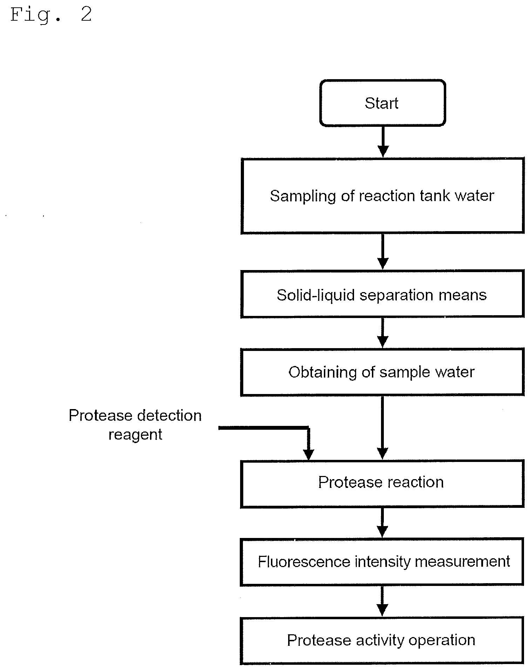

Fig. 2 shows a procedure for measuring activity of protein degradation enzyme (protease) contained in the waste water in the treatment tank 1 as one example of a means for measuring enzyme activity derived from microorganisms such as *Bacillus* bacteria in the waste water treatment according to the present invention. First, water in the treatment tank is obtained, and sample water is obtained by a solid-liquid separation means. Specific examples of the solid-liquid separation means include filtration by a filter having a pore diameter of 0.2 $\mu$m and centrifugation. Next, a protease detection reagent is added to sample water, and a protease reaction is performed for a predetermined period of time. As the protease detection reagent, for example, Fluorescent Protease Assay Kit (Thermo Fisher Scientific K.K.) or the like can be used. This kit includes a reagent in which fluorescence intensity is raised by enzyme activity according to protease. When this kit is used, the reagent is added and the resulting mixture is left to stand for 5 to 60 minutes at room temperature, and then fluorescence intensity is measured, and protease activity in the sample water can be calculated from a previously prepared calibration curve or the like. As an activity unit of the protease activity, a unit such as micromole per minute (unit) can be used, in which the unit is standardized by a produced amount per time for a predetermined degradation product to be produced when a protein serving as a standard is degraded under predetermined conditions.

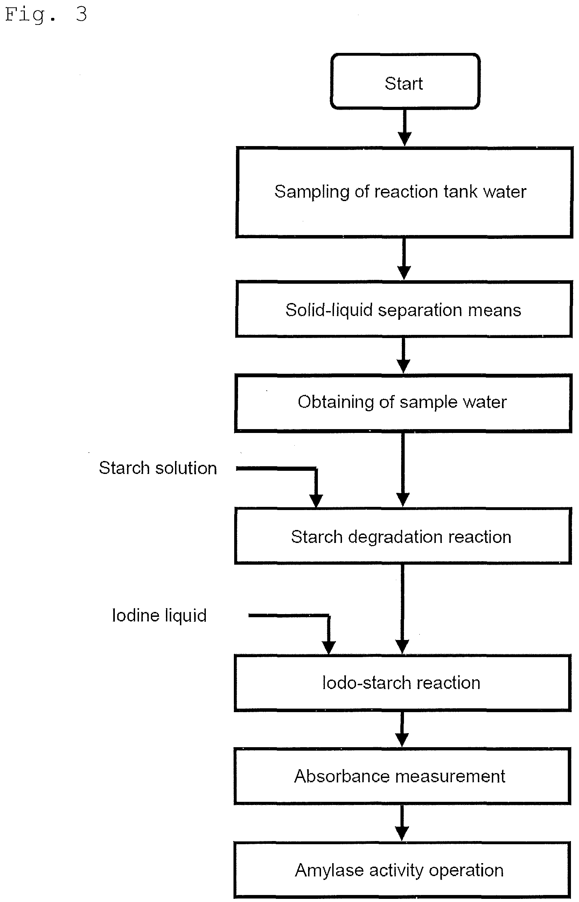

Fig. 3 shows one example of a procedure for measuring activity of carbohydrase (amylase) contained in the waste water in the treatment tank 1 as another example of a means for measuring enzyme activity derived from microorganisms such as *Bacillus* bacteria in the waste water treatment according to the present invention. First, water in the treatment tank is obtained, and sample water is obtained by a solid-liquid separation means. Specific examples of the solid-liquid separation means include filtration by a filter having a pore diameter of 0.2 $\mu$m and centrifugation. Next, a water-soluble starch is added to sample water, and a starch degradation reaction is performed for a predetermined period of time, typically, for about 60 minutes at room temperature. Then, an iodine solution is added dropwise thereto to perform an iodo-starch reaction, and then absorbance of a sample is measured. If the starch remains, purple specific to the iodo-starch reaction is exhibited, and if the starch is degraded, no color change is caused. For example, coloring according to the iodo-starch reaction can be measured in terms of absorbance at 550 nm. Amylase activity can be calculated from this measured value. As an activity unit of the amylase activity, a unit such as micromole per minute (unit) can be used, in which the unit is standardized by a produced amount per time for a predetermined degradation product to be produced when the water-soluble starch serving as a standard is degraded under predetermined conditions.

In addition, enzyme activity according to an enzyme other than the enzyme described above may be applied as the indicator. For example, enzyme activity according to a lipolytic enzyme, a cellulolytic enzyme or the like can also be applied as the indicator.

Enzyme activity derived from the microorganisms such as *Bacillus* bacteria contained in the waste water in the treatment tank can be referred to as a direct indicator reflecting activity of the microorganisms such as *Bacillus* bacteria utilized for the biotreatment of the waste water. Accordingly, if the activity of the microorganisms such as *Bacillus* bacteria in the water in the treatment tank is judged to be deficient in the control device 14 based on the measured value of enzyme activity by the enzyme activity measuring instrument 13, control of increasing the amount of supply of the activator into the waste water in the treatment tank 1 can be performed by increasing the amount of operation of the activator feed pump 8 or opening the activator feed adjustment valve 9, or performing both thereof according to the signal from the control device 14. On the other hand, if the activity of the microorganisms such as *Bacillus* bacteria is judged to be sufficient, control of reducing the amount of supply of the activator into the waste water in the treatment tank 1 can be performed by reducing the amount of operation of the activator feed pump 8 or tightening the activator feed adjustment valve 9, or performing both thereof according to the signal from the control device 14. In addition, in the case of the latter control, supply of the activator may be obviously completely stopped.

For example, in the waste water treatment equipment shown in Fig. 1, the activator containing the silicon compound, and further at least the iron compound and the magnesium compound is reserved in the activator supply tank 7, and can be added into the treatment tank 1 by the activator feed pump 8 during a desired time. Thus, growth of the microorganisms is activated mainly by the silicon component or the like contained in the activator, secretion of protease or carbohydrase secreted outside the bacterial cell by the microorganisms is increased mainly by the iron component, the magnesium component or the like contained in the activator. In this case, a content ratio of the silicon compound to a total amount of the iron compound and the magnesium compound to be contained in the activator is preferably 0.5 : 1 to 5 : 1, and further preferably 2 : 1 in terms of mass. Moreover, the silicon compound is preferably added thereto so as to exist in a concentration of 0.1 to 2% by mass in the waste water in the treatment tank 1 based on a BOD load amount in the treatment tank, and further preferably added thereto so as to exist in a concentration of 0.2 to 1% by mass based on the BOD load amount in the treatment tank. In the case of the iron compound or the magnesium compound, the iron compound or the magnesium compound is preferably added thereto so as to exist in a concentration of 0.1 to 2% by mass in terms of a total of both the compounds in the waste water in the treatment tank 1 based on the BOD load amount in the treatment tank , and further preferably added thereto so as to exist in a concentration of 0.4 to 2% by mass in terms of the total of both the compounds based on the BOD load amount in the treatment tank.

On the other hand, in other aspects of the present invention, activation treatment of the microorganisms for improving the state of clogging of the separation membrane is preferably performed according to the state of clogging of the separation membrane. For example, the activation treatment can be performed by adding the activator described above, or the like to the waste water to be subjected to the activated sludge treatment in the treatment tank 1. More specifically, the activation treatment can be performed by treatment of adding the activator to the waste water in the treatment tank 1 from the activator supply tank 7 through the activator feed pump 8 and the activator feed adjustment valve 9, or the like in a manner similar to the control based on the enzyme activity. Thus, growth of the microorganisms is activated mainly by the silicon component or the like contained in the activator, secretion of protease or carbohydrase secreted outside the bacterial cell by the microorganisms is increased mainly by the iron component, the magnesium component or the like contained in the activator.

In order to understand the state of clogging of the separation membrane, for example, the state can be understood by measuring whether or not the water pressure and/or the water flow rate of treated water subjected to solid-liquid separation by using the separation membrane is less than a predetermined value arbitrarily determined, or the like. More specifically, while the separation membrane is clogged with passage of time of operation of waste water treatment, and a transmembrane pressure is raised, the water pressure and/or the water flow rate of the treated water subjected to solid-liquid separation by using the separation membrane is reduced, and therefore when the water pressure and/or the water flow rate is less than a predetermined threshold value over the threshold value, such a case can be judged to be in a time for eliminating clogging. In this case, the measurement is preferably performed after applying backwash treatment of the separation membrane by applying the water pressure and/or the water flow from a treated water side reverse to a side during steady state operation or bubbling treatment of the separation membrane. Thus, the measurement is performed after excluding the foreign matters comparatively weakly adhered to the membrane module 2, and therefore the state of clogging of the separation membrane can be further exactly understood. For example, in the waste water treatment equipment shown in Fig. 1, the water pressure and/or the water flow rate of treated water subjected to solid-liquid separation by using the separation membrane is configured to be monitored by the sensor 10 provided on the way of the pipe communicating with the membrane module 2. Moreover, the water pressure and/or the water flow from the treated water side can be applied by reversing a sucking direction by the suction pump 3. In addition, with regard to the measurement of the water flow rate serving as an indicator for understanding the state of clogging of the separation membrane, the water flow rate can be measured, for example, by measuring whether or not an amount of water per unit time for the treated water subjected to solid-liquid separation by using the separation membrane is less than a predetermined value arbitrarily determined, or the like. Moreover, the water pressure serving as the indicator for understanding the state of clogging of the separation membrane may be measured by calculation from the measured value of the water flow rate according to a predetermined relational formula.

In the waste water treatment method to be provided by the present invention, control based on the state of clogging of the separation membrane and control based on the enzyme activity derived from the microorganisms contained in the waste water in the treatment tank can also be performed independently of each other, or may be provided therewith together.


(Waste water treatment equipment)

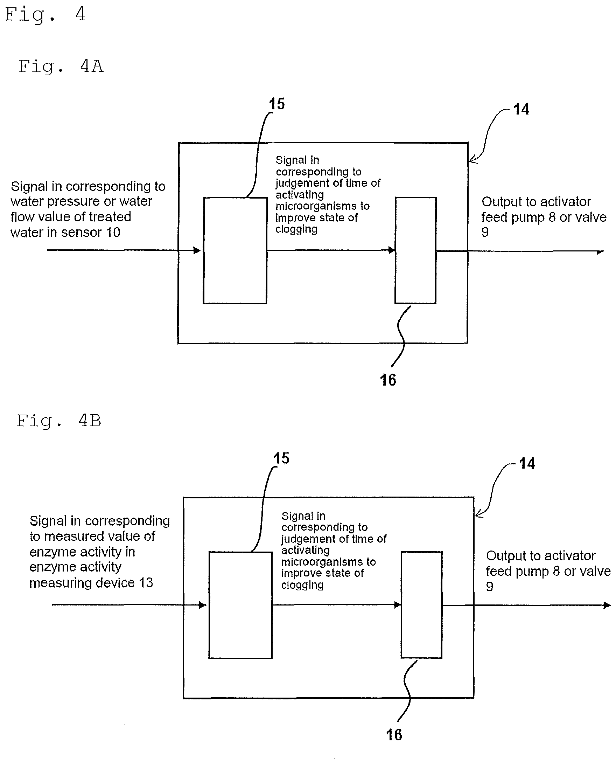

If the waste water treatment equipment to be provided by the present invention is further described with reference to Fig. 1 and Fig. 4, the activator described above is configured to be reserved in the activator supply tank 7, and supplied into the treatment tank 1 by the activator feed pump 8 therefrom, which structures "the means for supplying the activator of microorganisms for improving the state of clogging of the separation membrane" of the present invention. Moreover, the sensor 10 is configured to be provided on the way of the pipe communicating with the membrane module 2 to monitor the water pressure and/or the water flow rate of treated water subjected to solid-liquid separation by using the separation membrane, which structures "the means for measuring the state of clogging of the separation membrane" of the present invention. Moreover, the enzyme activity measuring instrument 13 for measuring the enzyme activity derived from the microorganisms such as *Bacillus* bacteria contained in the waste water in the treatment tank 1 is installed, which structures "the means for measuring enzyme activity derived from the microorganisms" of the present invention.

Further, the waste water treatment equipment is provided with the control device 14 in which a signal in corresponding to the value of the water pressure and/or the water flow rate of treated water in the sensor 10 can be received to transmit a driving signal to the activator feed pump 8 or the activator feed adjustment valve 9, which structures "the control means for controlling the amount of supply of the activator into the waste water to be subjected to the activated sludge treatment in the treatment tank" of the present invention.

The control device 14 is also configured so as to receive the signal in corresponding to the measured value of enzyme activity in the enzyme activity measuring instrument 13 to transmit the driving signal to the activator feed pump 8 or the activator feed adjustment valve 9. In addition, the waste water treatment equipment to be provided by the present invention can also be provided with "the means for measuring the state of clogging of the separation membrane" by the sensor 10 of the present invention, and "the means for measuring enzyme activity derived from the microorganisms" by the enzyme activity measuring instrument 13 of the present invention independently of each other, or may be provided with both.

Then, when the value of the water pressure and/or the water flow rate of treated water in the sensor 10 is input into an operation unit 15 of the control device 14, and compared with a predetermined value arbitrarily determined and stored in the operation unit 15, and the value is less than the predetermined value, such a case is judged to be in a time for activating the microorganisms for improving the state of clogging (Fig. 4A). Then, the signal in corresponding to the judgement causes, through an output unit 16, driving of the activator feed pump 8 or increasing of a driving amount thereof, or opening of the activator feed adjustment valve 9 or increasing of an opening amount thereof (Fig. 4A). Thus, the activator can be supplied into the treatment tank 1, or the amount of supply can be increased based on the state of clogging of the separation membrane. In addition, supply of the activator may be continued until the value of the water pressure and/or the water flow rate of treated water in the sensor 10 is compared with a determined predetermined value arbitrarily determined and stored in the operation unit 15 of the control device 14, and the value becomes equal to or more than the predetermined value, or the supply may be terminated at a predetermined time.

Moreover, when the measured value of enzyme activity in the enzyme activity measuring instrument 13 is input into the operation unit 15 of the control device 14, and is compared with a predetermined value arbitrarily determined and stored in the operation unit 15, and the value is less than the predetermined value, such a case is judged to be in a time for activating the microorganisms for improving the state of clogging (Fig. 4B). Then, the signal in corresponding to the judgement causes, through the output unit 16, driving of the activator feed pump 8, or increasing of the driving amount thereof, or opening of the activator feed adjustment valve 9 or increasing of the opening amount thereof (Fig. 4B). Thus, the activator can be supplied into the treatment tank 1, or the amount of supply can be increased based on the state of activity of the microorganisms for improving the state of clogging. In addition, supply of the activator may be continued until the measured value of enzyme activity in the enzyme activity measuring instrument 13 is compared with the predetermined value arbitrarily determined and stored in the operation unit 15 of the control device 14, and the value becomes equal to or more than the predetermined value, or the supply may be terminated at a predetermined time.

In the waste water treatment equipment to be provided by the present invention, the equipment may be provided with control based on the state of clogging of the separation membrane and control based on the enzyme activity derived from the microorganisms contained in the waste water in the treatment tank independently of each other, or may be provided therewith together.

[Examples]

Hereinafter, the present invention will be described in further detail by way of Examples, but the scope of the present invention is not limited by the Examples at all.

<Test Example 1> (Sludge degradation performance by bacilli)

In general, dead bodies of microorganisms contained in sludge, sugar or protein released when extinction of such microorganisms, and the like are known to be one of factors of clogging of a separation membrane in a separation membrane activated sludge method or the like. Accordingly, whether or not an amount of sludge itself can be reduced by bacilli was examined.

(1) Sludge

As sludge, excess sludge of bypass sewage treatment plant was arranged.

(2) Enzyme fluid

*Bacillus methylotrophicus* (hereinafter, referred to as "bacilli A") of *Bacillus* bacteria was inoculated into a Nutrient medium, and cultured at 30°C overnight. At this time, a commercially available activator (mineral containing silicate) for improving activity of bacilli was added to the medium to be 2 mg/mL and cultured, the resulting culture fluid was filtrated with a filter having a pore size of 0.2 $\mu$m, and a filtrate thereof was taken as an enzyme fluid.

(3) Sludge reduction test

A test was conducted by a group in which a portion of 10 g of sludge was put into a 1 L vessel, and 10 mL of pure water was added thereto as a blank, a group in which a portion of 10 g of sludge was put into a 1 L vessel, and 10 mL of the enzyme fluid was added thereto, and a group in which a portion of 10 g of sludge was put into a 1 L vessel, 10 mL of a culture fluid containing bacilli A in a concentration of about $10^{10}$ pieces/mL in the number of the bacilli were added thereto, and 20 mg of the commercially available activator was added thereto.

In each test group, treatment was performed at 25°C for 48 hours, a weight of sludge was measured before or after the treatment to determine a sludge reduction rate. The sludge reduction rate was calculated from a ratio of a sludge concentration in each test system to an initial sludge concentration according to the following formula.

$$[\text{Sludge reduction rate}] = \{(100 - [\text{sludge concentration in each test system}]) / [\text{initial sludge concentration}]\} \times 100$$

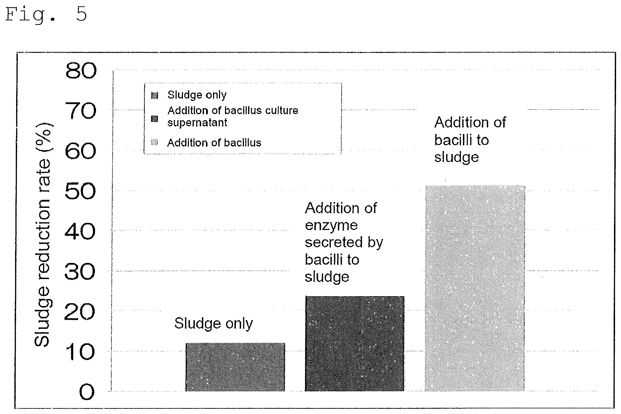

The results are shown in Fig. 5.

As a result, the reduction rate was only about 12% in the sludge only, and reduction thereof was considered to be merely a decrease caused by extinction of microorganisms contained in the sludge. On the other hand, if a supernatant of the culture fluid in which bacilli were cultured with the activator was added thereto, the reduction rate of sludge was increased to about 24%, and further if bacilli were directly added to the sludge together with the activator, the reduction rate of sludge was increased to about 51%. This reason was considered to be caused by results in which a sludge component (sugar, protein or the like) was degraded by an enzyme secreted by bacilli, and a part of sludge was solubilized.

<Test Example 2> (Degradation performance of a soluble microbial product by bacilli)

Degradation performance of bacilli relative to SMP (soluble microbial product: sugar or protein released into treated water, or the like) which is considered as one of main factors of clogging of a separation membrane in a separation membrane activated sludge method or the like was examined. Specifically, treated water in a treatment tank reaching stable operation by bacilli domination sludge and treated water in the treatment tank reaching stable operation by standard activated sludge were subjected to a gel permeation chromatography apparatus with a total carbon detector (GPC-TC). While a soluble organic substance in the treated water was developed according to a difference in a molecular weight by gel permeation chromatography (GPC), an amount thereof was measured by a TOC (total organic carbon) detector. The results are shown in Table 1.

[Table 1]

| | Treated water by Bacillus domination sludge | Treated water by standard activated sludge |
|---|---|---|
| Concentration of organic substance having molecular weight of 10,000 or more | 0.78 mg/L | 5.17 mg/L |

As a result, a concentration of an organic substance having a molecular weight of 10, 000 or more (corresponding to SMP) was significantly reduced in the treated water in the treatment tank reaching stable operation by bacillus domination sludge, in comparison with the treated water by standard activated sludge. The reason was considered in such a manner that an SMP component (sugar, protein or the like) was degraded by an enzyme secreted by bacilli.

(Preparation Example 1) Pulverized product A of blast furnace slag

As an activator used for activated sludge treatment, blast furnace slag was pulverized by a jet mill (made by Aishin Nano Technologies Co. , Ltd.) to prepare powder of blast furnace slag. Hereinafter, the powder is referred to as a pulverized product A of blast furnace slag.

(Preparation Example 2) Pulverized product B of blast furnace slag

Powder of blast furnace slag was prepared by adjusting conditions of pulverization in a manner weaker than the conditions in Preparation Example 1. Hereinafter, the powder is referred to as a pulverized product B of blast furnace slag.

<Test Example 3> (Measurement of a particle size distribution)

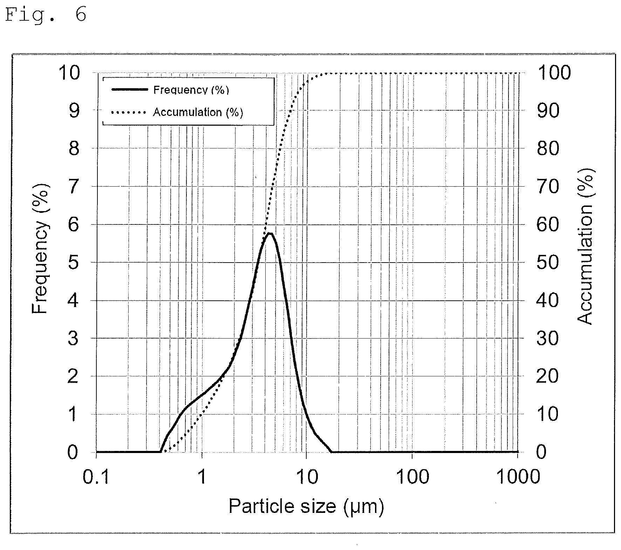

A particle size distribution of a pulverized product A of blast furnace slag was measured using a laser diffraction scattering type particle size distribution measuring apparatus ("Microtrac MT3000", NIKKISO CO. , LTD.) . The results are shown in Fig. 6. As shown in Fig. 6, in a number-based particle size distribution, the pulverized product A had a particle size less than 10 $\mu$m in 30% or more of the number in total, and a particle size over 100 $\mu$m in the number less than 10% in total.

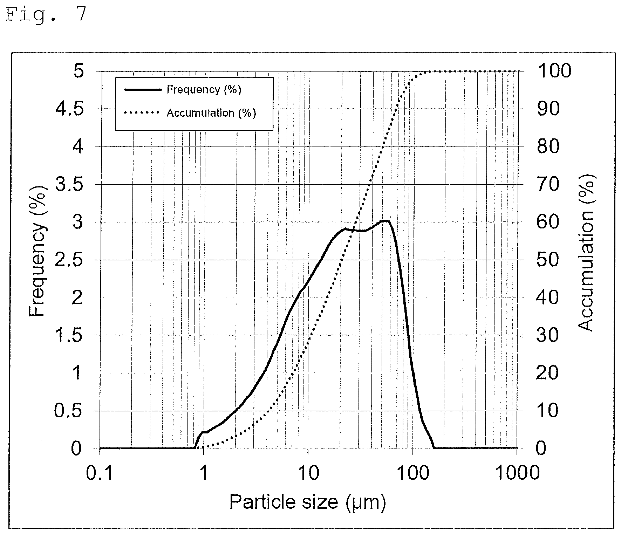

A particle size distribution of a pulverized product B of blast furnace slag was also measured in a similar manner. The results are shown in Fig. 7. As shown in Fig. 7, in the number-based particle size distribution, the pulverized product B had a particle size less than 10 $\mu$m in the number less than 30% in total.

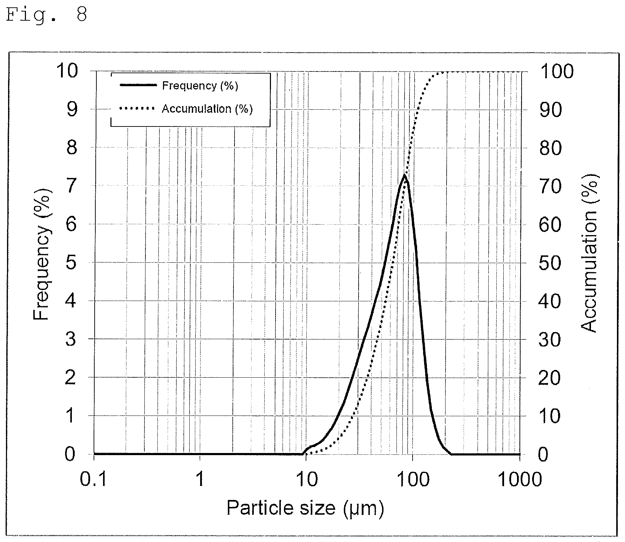

A particle size distribution of a commercial item being commercially available as the activator used for activated sludge treatment was also measured in a similar manner. The results are shown in Fig. 8. As shown in Fig. 8, in the number-based particle size distribution, the commercial item had a particle size less than 10 $\mu$m in the number less than 30% in total, and a particle size over 100 $\mu$m in the number higher than 10% in total.

<Test Example 4> (Effect of an activator on growth of bacilli)

An effect of activating growth of bacilli was examined on each of a pulverized product A of blast furnace slag, a pulverized product B of blast furnace slag and a commercial item (main composition (% by mass) : silicon 19.3, iron 3.6, calcium 3.9, magnesium 4.2, aluminum 3.4 and manganese 0.1) being commercially available as an activator used for activated sludge treatment. As the bacilli, *Bacillus* bacteria (bacilli A) belonging to *Bacillus methylotrophicus* used also in Test Example 1, and *Bacillus* bacteria (hereinafter, referred to as "bacilli B") belonging to *Bacillus subtilis* were used.

Each of bacilli was inoculated into a Nutrient medium, and subjected to shaking culture at 30°C. At this time, as the activator for improving activity of bacilli, a pulverized product A, a pulverized product B or a commercial item was each added to the medium to be 16 mg/L and cultured, and after culture was started, turbidity (OD600) of a culture fluid was measured over time. Moreover, a doubling time of bacilli was calculated from a growth curve thereof.

Table 2 shows the results by bacilli A.

[Table 2]

| (Bacilli A) | | | |
|---|---|---|---|
| | Pulverized product A | Pulverized product B | Commercial item |
| OD600 after 8 hours from culture | 0.95 | 0.28 | 0.58 |
| Doubling time (hr) | 2.2 | n.d.* | 2.9 |
| Growth rate (1/hr) | 0.45 | n.d.* | 0.35 |
| n.d.*: Not determined | | | |

Table 3 shows the results by bacilli B.

[Table 3]

| (Bacilli B) | | | |
|---|---|---|---|
| | Pulverized product A | Pulverized product B | Commercial item |
| OD600 after 8 hours from culture | 1.15 | 0.25 | 0.55 |
| Doubling time (hr) | 2.1 | n.d.* | 3.3 |
| Growth rate (1/hr) | 0.47 | n.d.* | 0.33 |
| n.d.*: Not determined | | | |

As a result, the effect of activating the growth was higher for all in each of bacilli in the order of the pulverized product A, the commercial item and the pulverized product B. If the pulverized product A and the commercial item were compared with each other in the doubling time or the growth rate, the effect of activating the growth of bacilli was 1.3 times higher in the bacilli A and 1.6 times higher in the bacilli B in the pulverized product A than in the commercial item.

<Test Example 5> (Effect of an activator on protease production of bacilli)

An effect of activating protease production by bacilli was examined on each of a pulverized product A of blast furnace slag, a pulverized product B of blast furnace slag and a commercial item being commercially available as an activator used for activated sludge treatment. As the bacilli, bacilli A and bacilli B were used in a manner similar to Test Example 4.
Each of bacilli was inoculated into a Nutrient medium, and subjected to shaking culture at 30°C. At this time, as the activator for improving activity of bacilli, the pulverized product A, the pulverized product B or the commercial item were each added to the medium to be 16 mg/L and cultured, culture was stopped after elapse of 24 hours from culture start, and proteolysis activity was measured on a culture fluid prepared by removing the bacilli therefrom by centrifugation. In addition, growth was recognized to be saturated after elapse of 24 hours from the culture start.
Proteolysis activity was measured using Fluorescent Protease Assay Kit (Thermo Fisher Scientific K.K.). In a reagent contained in the kit, fluorescence intensity is raised by presence of protease. Each sample was provided for the kit to measure the fluorescence intensity, and simultaneously trypsin being one of proteases was separately diluted stepwise at a predetermined concentration, and the fluorescence intensity was measured in a similar manner to obtain a calibration curve. Activity of protease in the sample was determined in terms of an amount equivalent to trypsin per 1 mL of culture fluid by applying the fluorescence intensity measured in each sample to the calibration curve.

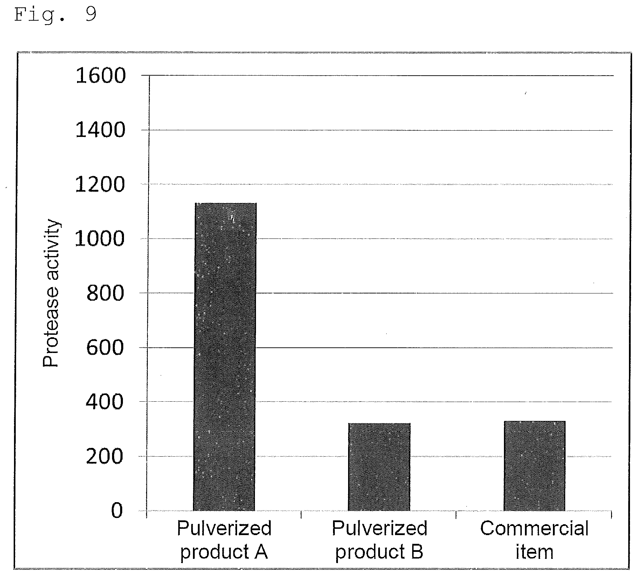

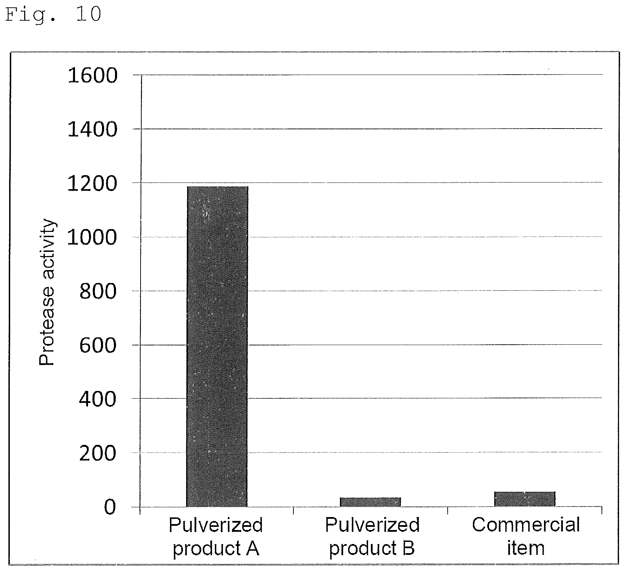

Fig. 9 shows the results by bacilli A. Moreover, Fig. 10 shows the results by bacilli B.
As shown in Fig. 9, trypsin equivalent of protease in the culture fluid of the bacilli A was 1,130 ng/mL in the pulverized product A, 320 ng/mL in the pulverized product B and 330 ng/mL in the commercial item, and in the case where the pulverized product A was added to the medium, the protease in an amount of about 3.4 to 3.5 times was produced in comparison with the case where the pulverized product B or the commercial item was added to the medium at the same concentration.
In a similar manner, as shown in Fig. 10, trypsin equivalent of protease in the culture fluid of the bacilli B was 1, 190 ng/mL in the pulverized product A, 33 ng/mL in the pulverized product B and 54 ng/mL in the commercial item, and in the case where the pulverized product A was added to the medium, the protease in an amount of about 22 times was produced in comparison with the case where the commercial item was added to the medium at the same concentration. Moreover, the protease in an amount of about 36 times was produced in comparison with the case where the pulverized product B was added to the medium at the same concentration.

<Test Example 6> (Effect of an activator on carbohydrase production of bacilli)

Activity of carbohydrase secreted in a culture fluid was examined on each culture fluid of each of bacilli cultured in a manner similar to Test Example 5.

Specifically, the culture fluid after elapse of 24 hours from culture start was collected, a culture fluid prepared by removing the bacilli therefrom by centrifugation was obtained. To 1.95 mL of the culture fluid, 0.05 mL of a 0.5% water-soluble starch was added, and after 60 minutes an iodine solution was added dropwise thereto. If the starch remains, bluish purple specific to an iodo-starch reaction is exhibited, and if the starch is degraded, no color change is caused. Coloring thereof was measured in terms of absorbance (A550) at 550 nm.

As shown in the following calculation formula, the activity of carbohydrase was represented by what percentage the enzyme can degrade the added starch in 60 minutes, and standardized.

```
[Carbohydrase activity (%)] = {([A550 of starch only] -

[A550 of a system to which a culture fluid is added]) / ([A550

of starch only] - [A550 of system without starch])} × 100.
```

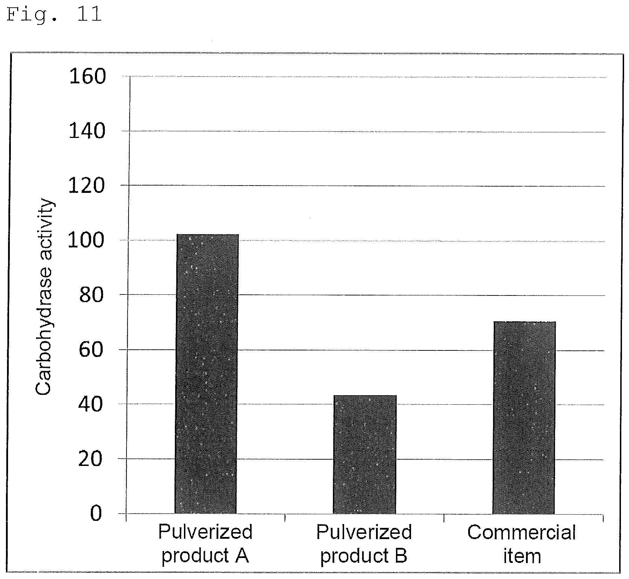

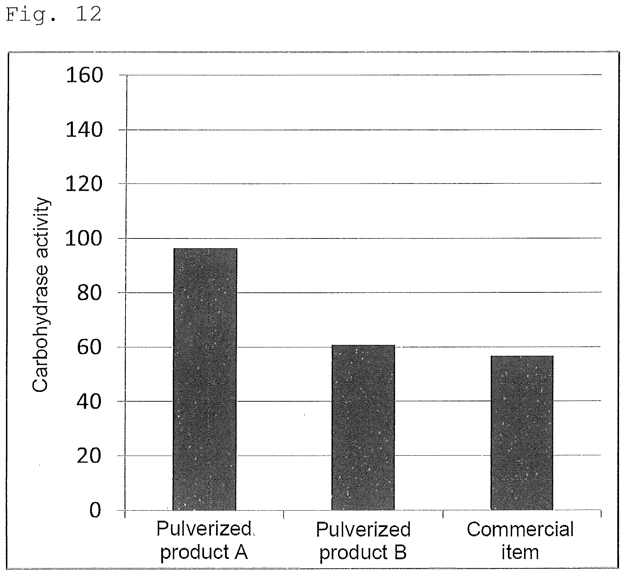

Fig. 11 shows the results by bacilli A. Moreover, Fig. 12 shows the results by bacilli B.

As shown in Fig. 11, the carbohydrase activity of the bacilli A in the culture fluid was 102% in a pulverized product A, 44% in a pulverized product B and 70% in a commercial item, and in the case where the pulverized product A was added to the medium, the carbohydrase in an amount of about 1.5 times was produced in comparison with the case where the commercial item was added to the medium at the same concentration. Moreover, the carbohydrase in an amount of about 2.3 times was produced in comparison with the case where the pulverized product B was added to the medium at the same concentration.

In a similar manner, as shown in Fig. 12, carbohydrase activity of the bacilli B in the culture fluid was 96% in a pulverized product A, 61% in a pulverized product B and 57% in a commercial item, and in the case where the pulverized product A was added to the medium, the carbohydrase in an amount of about 1.7 times was produced in comparison with the case where the commercial item was added to the medium at the same concentration. Moreover, the carbohydrase in an amount of about 1.6 times was produced in comparison with the case where the pulverized product B was added to the medium at the same concentration.

From verification in Test Examples 3 to 6 described above, it was revealed that, when materials with poor solubility, such as blast furnace slag, were used as the activator to be used for activated sludge treatment, an activation effect relating to growth performance and enzyme activity of bacilli is further significantly developed by pulverizing the materials into a predetermined particle size and then using the resulting material. Moreover, the effect was superior to the effect of the conventional activator.

<Test Example 7> (Effect of a mineral component on growth of bacilli)

In general, if a mineral such as a mineral substance is added in a waste water treatment process, bacilli are known to be dominated in a microbial flora balance in activated sludge. The reason is considered in such a manner that a silicon compound contained in the mineral causes promotion of growth of bacilli, or improvement of resistance under an adverse environment (see Journal of Environmental Biotechnology (2011), vol.11, No.1·2, pp. 47 to 53, The 65th Annual Meeting of The Society for Biotechnology, Japan, Abstracts, p. 221).

Accordingly, iron, aluminum, calcium, magnesium and manganese are selected as a metallic component generally contained in a mineral and other than silicon, and an influence on growth of bacilli was examined on each. As the bacilli, bacilli A and bacilli B were used in a manner similar to Test Examples 4 to 6.

Each of bacilli was inoculated into a minimum medium (glucose: 5 g/L, $K_2HPO_4$: 14 mg/L, $KH_2PO_4$: 6 g/L, $NH_4Cl$: 1 g/L), and subjected to shaking culture at 30°C. At this time, as the metallic component, silicon (final concentration: 27.8 mg/L), iron (final concentration: 9 mg/L), aluminum (final concentration: 8.8 mg/L), calcium (final concentration: 17.2 mg/L), magnesium (final concentration: 18 mg/L) and manganese (final concentration: 20 mg/L) were added to the medium so as to have the final concentration in parentheses for each. Moreover, a system in which a specific metallic component was not added was provided.

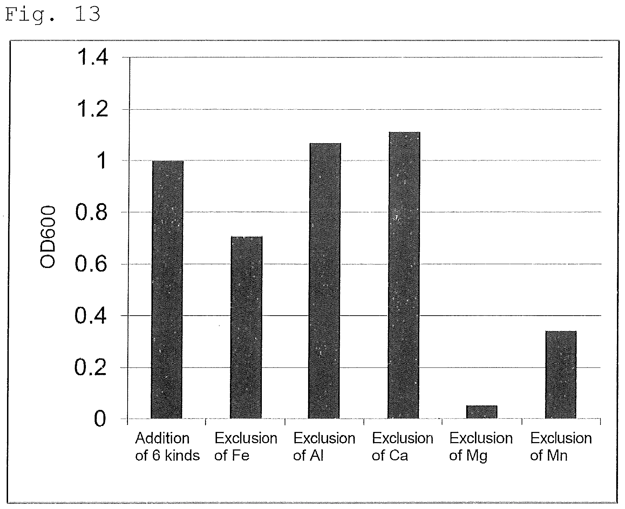

Fig. 13 shows a relative value of turbidity (OD600) of a culture fluid after elapse of 12 hours from culture start of bacilli A (relative value to a system to which 6 kinds of metallic components were added).

As shown in Fig. 13, the turbidity (OD600) of the culture fluid was reduced in a system from which iron, magnesium or manganese was excluded, in comparison with the system to which 6 kinds of metallic components were added. Thus, it was revealed that thees metallic components are required for promotion of growth of the bacilli A.

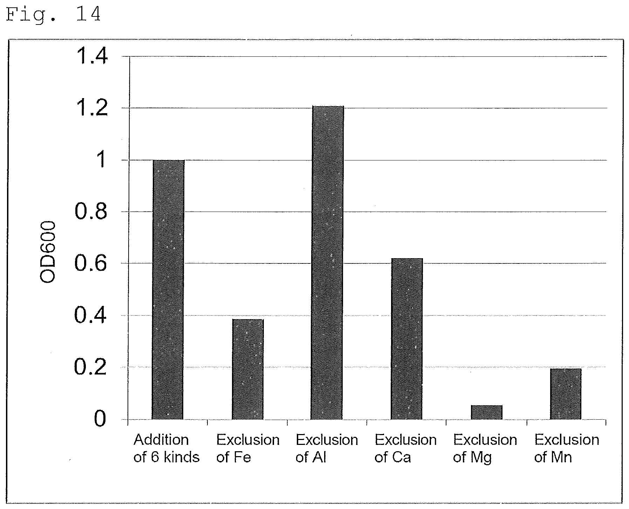

Fig. 14 shows a relative value of turbidity (OD600) of a culture fluid after elapse of 12 hours from culture start of bacilli B (relative value to the system to which 6 kinds of metallic components were added).

As shown in Fig. 14, the turbidity (OD600) of the culture fluid was reduced in the system from which iron, calcium, magnesium or manganese was excluded, in comparison with the system to which 6 kinds of metallic components were added. Thus, it was revealed that thees metallic components are required for promotion of growth of the bacilli B.

In addition, although not shown in the results described above, manganese exhibited a working effect of inhibiting growth of bacilli on the contrary, if an excessive amount thereof was added.

<Test Example 8> (Effect of a mineral component on protease production of bacilli)

Iron, aluminum, calcium and magnesium were selected as a metallic component generally contained in a mineral and other than silicon, and an influence on protease production of bacilli was examined on each. As the bacilli, bacilli A and bacilli B were used in a manner similar to Test Example 7.

Each of bacilli was inoculated into a Nutrient medium, and subjected to shaking culture at 30°C. At this time, as the metallic component, silicon (final concentration: 27.8 mg/L), iron (final concentration: 9 mg/L), aluminum (final concentration: 8.8 mg/L), calcium (final concentration: 17.2 mg/L) and magnesium (final concentration: 18 mg/L) were added to the medium so as to have the final concentration in parentheses for each. Moreover, a system in which a specific metallic component was not added was provided.

Culture was stopped after elapse of 24 hours from culture start, and proteolysis activity was measured on a culture fluid obtained by removing the bacilli by centrifugation, in a manner similar to Test Example 5. In addition, growth was recognized to be saturated after elapse of 24 hours from the culture start.

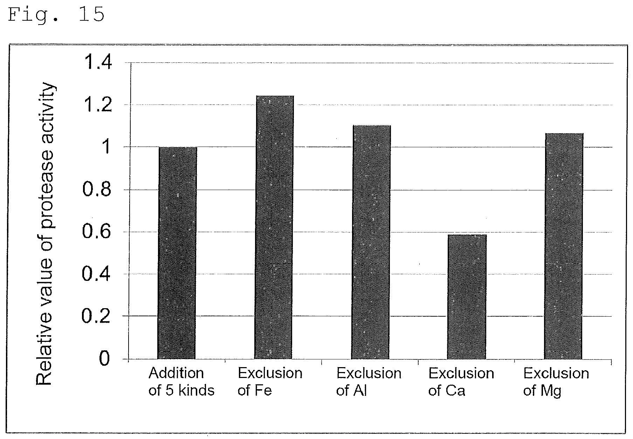

Fig. 15 shows a relative value of protease activity per the number of bacilli in a culture fluid of bacilli A (relative value per the number of the bacilli to a system in which 5 kinds of metallic components were added).

As shown in Fig. 15, the protease activity was reduced in a system from which calcium was excluded, in comparison with the system in which 5 kinds of metallic components were added, Thus, it was revealed that calcium is required for promotion of secretion of protease from the bacilli A.

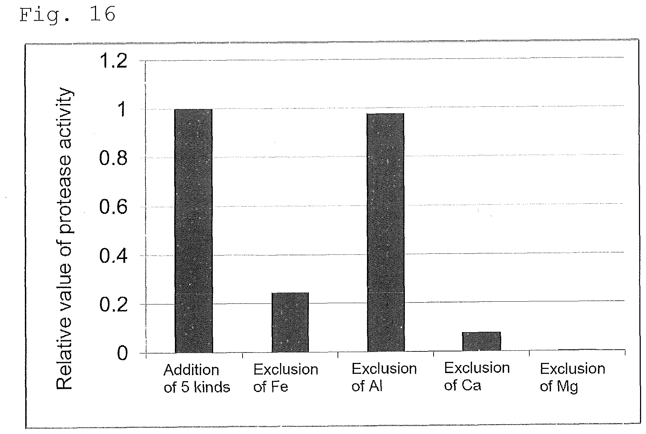

Fig. 16 shows a relative value of protease activity per the number of bacilli in a culture fluid of bacilli B (relative value per the number of the bacilli to the system in which 5 kinds of metallic components were added).

As shown in Fig. 16, the protease activity was reduced in a system from which iron, calcium or magnesium was excluded, in comparison with the system in which 5 kinds of metallic components were added. Thus, it was revealed that these metallic components are required for promotion of secretion of protease from the bacilli B.

<Test Example 9> (Effect of a mineral component on carbohydrase production of bacilli)

Activity of carbohydrase secreted into a culture fluid was examined on each culture fluid of each of bacilli cultured in a manner similar to Test Example 8, in a manner similar to Test Example 6.

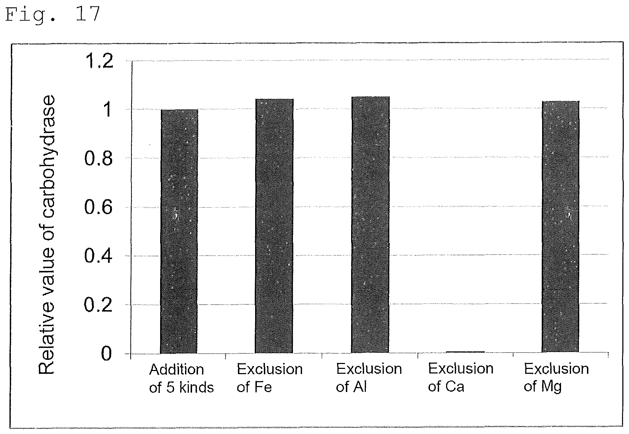

Fig. 17 shows a relative value of carbohydrase activity per the number of bacilli in a culture fluid of bacilli A (relative value per the number of the bacilli to a system in which 5 kinds of metallic components were added).

As shown in Fig. 17, the carbohydrase activity was reduced in a system from which calcium was excluded, in comparison with the system in which 5 kinds of metallic components were added. Thus, it was revealed that calcium is required for promotion of secretion of carbohydrase from the bacilli A.

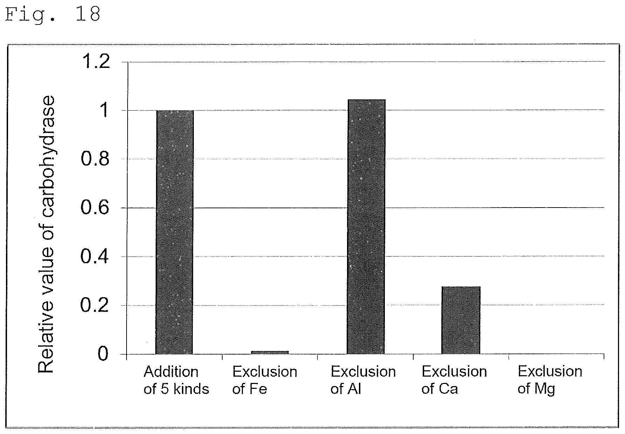

Fig. 18 shows a relative value of carbohydrase activity per the number of bacilli in a culture fluid of bacilli B (relative value per the number of the bacilli to the system in which 5 kinds of metallic components were added).

As shown in Fig. 18, the carbohydrase activity was reduced in a system from which iron, calcium or magnesium was excluded, in comparison with the system in which 5 kinds of metallic components were added. Thus, it was revealed that these metallic components are required for promotion of secretion of carbohydrase from the bacilli B.

From verification in Test Examples 7 to 9 described above it was revealed that the activator used for activated sludge treatment of waste water and dominating the bacilli preferably contains at least iron, magnesium and calcium in addition to silicon which has been known so far. Moreover, it was revealed that the four kinds of metallic components described above are preferably appropriately combined and used according to kinds of the bacilli.

Table 4 exemplifies compositions of materials derived from various minerals which have been so far used for general purpose in other applications.

[Table 4]

| Name of substance | % by mass | | | | | |
|---|---|---|---|---|---|---|
| | Silicon | Iron | Calcium | Magnesium | Aluminum | Manganese |
| Blast furnace slag | 15.9 | 0.32 | 29.3 | 3.1 | 8.12 | 0.14 |
| Diatomaceous earth | 38.6 | 2.14 | 24.4 | 10.3 | 0.04 | 0.01 |
| Perlite | 19.3 | 3.62 | 3.68 | 4.21 | 3.44 | 0.08 |
| Cement | 22.6 | 3.3 | 64.7 | 2.7 | 5.7 | No data |

As shown in Table 4, in addition to blast furnace slag verified in Test Examples 3 to 6, for example, diatomaceous earth, perlite, cement and the like are also the materials derived from the mineral, and containing silicon, iron, magnesium and calcium.

Thus, the materials derived from the mineral contain a component for activating the growth performance and the enzyme activity of bacilli, but are generally the material with poor solubility, and the activation effect relating to the growth performance and the enzyme activity of bacilli was considered to be further significantly developed by pulverizing the materials into a predetermined particle and used as the activator in a manner similar the blast furnace slag verified in Test Examples 3 to 6.

Moreover, the activation effect relating to the growth performance and the enzyme activity of bacilli was considered to be further significantly developed by appropriately combining the metallic components verified in Test Examples 7 to 9 and using the resulting material.

<Test Example 10>

A waste water treatment test was conducted by using the waste water treatment equipment (effective volume of a treatment tank 1: 10 L) described by showing the schematic configuration diagram in Fig. 1.

As specimen water, water having water quality shown in Table 5 was used.

[Table 5]

| [Water quality of specimen water] | |
|---|---|
| | Unit: mg/L |
| Biochemical oxygen demand (BOD) | 500 |
| Chemical oxygen demand (COD) | 500 |
| Total nitrogen amount (T-N) | 20 |
| Total phosphorus amount (T-P) | 20 |
| n-hexane extract amount (n-Hex) | < 0.5 |
| Suspended solids amount (SS) | 0.5 to 1 |
| pH adjustment | (pH 6.8 to 7.0) |

Operational conditions were adjusted as shown in Table 6. On the above occasion, a test was conducted by changing kinds of activated sludge to be added in the treatment tank 1 as seed sludge (bacillus domination sludge or standard activated sludge) and kinds of membrane modules 2 (a flat membrane or a hollow fiber membrane), respectively, in condition No.1 to No. 4. Moreover, when the bacillus domination sludge was used, the pulverized product A of blast furnace slag prepared in Preparation Example 1 was added as an activator from an activator supply tank 7 to specimen water to be treated in the treatment tank 1 through an activator feed pump 8 and an activator feed adjustment valve 9 to be in an amount of 1.4 mg/L every day. With regard to an amount of aeration in each of the conditions No.1 to No. 4, the test was conducted by changing bubbling conditions over an operating period by adjusting output of a blower 6 to be 17.5 L per minute on the 1st day to the 7th day from test start, 12.5 L per minute on the 8th day to the 14th day, and 7.5 L per minute on the 15th day to the 23rd day.

[Table 6]

| [Operational conditions] | | | | |
| --- | --- | --- | --- | --- |
| | Condition No. 1 | Condition No. 2 | Condition No. 3 | Condition No. 4 |
| Kind of membrane | Flat membrane (Toray) | Hollow fiber membrane (Mitsubishi Rayon) | Hollow fiber membrane (Mitsubishi Rayon) | Flat membrane (Toray) |
| Microorganisms | Bacilli | Bacilli | Standard activated sludge | Standard activated sludge |
| Activator | Added | Added | None | None |
| Effective volume [L] | 10 | 10 | 10 | 10 |
| Number of membrane modules | 3 (every 0.02 m$^2$) | 2 (every 28 pieces) | 2 (every 28 pieces) | 3 (every 0.02 m$^2$) |
| Membrane area [m$^2$] | 0.06 | 0.06 | 0.06 | 0.06 |
| Flux [m/d] | 0.5 | 0.5 | 0.5 | 0.5 |
| Sludge concentration [g/L] | 10 | 10 | 10 | 10 |
| Amount of aeration [L/min] | 7.5 to 17.5* | 7.5 to 17.5* | 7.5 to 17.5* | 7.5 to 17.5* |
| Flow rate of inflow water [L/d] | 26.67 | 26.67 | 26.67 | 26.67 |
| HRT [hour] | 9 | 9 | 9 | 9 |
| Suction cycle [On/Off] | 9 min/1 min | 9 min/ 1min | 9 min/1 min | 9 min/1 min |
| * Amount of aeration: the 1st day to the 7th day: 17.5 L/min, the 8th day to the 14th day: 12.5 L/min, and the 15th day to the 23rd day: 7.5 L/min | | | | |

[Evaluation 1]

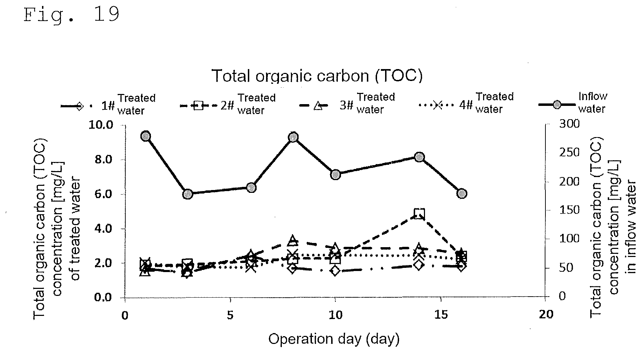

Water quality of treated water to the 16th day from operation start was measured by a (TOC) total organic carbon detector. The results are shown in Fig. 19.
As shown in Fig. 19, a removal ratio of TOC (total organic carbon) became about 98% or more based on a concentration of TOC (total organic carbon) of inflow specimen water under all the operational conditions, which was satisfactory.

[Evaluation 2]

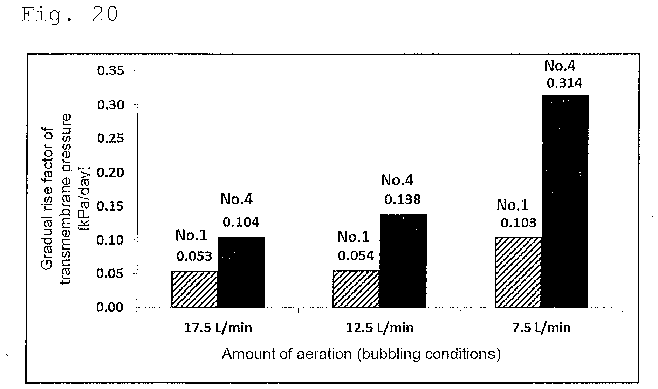

In order to examine a state of clogging of a membrane in the operational conditions of each of the condition No. 1 (bacilli domination) and the condition No. 4 (standard activated sludge), in which the flat membrane (made by Toray Industries, Inc.) was used as the kind of the membrane module, a transmembrane pressure (kPa) was measured by a sensor 10, and a gradual rise factor (kPa/day) was determined. The results are shown in Fig. 20.
As shown in Fig. 20, the gradual rise factor of the transmembrane pressure was significantly suppressed in the condition No.1 in which the bacilli were dominated by adding the activator, in comparison with the condition No. 4 in which the standard activated sludge was used, under all bubbling conditions also in the operating period in which the amount of aeration was adjusted to 17.5 L per minute, also in the operating period in which the amount of aeration was adjusted to 12.5 L per minute, and also in the operating period in which the amount of aeration was adjusted to 7.5 L per minute. In particular, for example, the gradual rise factor of the transmembrane pressure in the condition No. 4 in which the amount of aeration was adjusted to 17.5 L per minute and the standard activated sludge was used was comparable to the factor in the condition No. 1 in which the bacilli were dominated by adding the activator even when the amount of aeration was adjusted to 7. 5 L per minute . Thus, it was revealed that, although ordinarily bubbling is applied to the membrane under conditions equivalent to the amount of aeration of 17.5 L per minute in the test in order to prevent clogging of the separation membrane, only the amount of aeration of 7.5 L per minute is required when adding the activator to thereby dominate the bacilli, and thus an energy cost by such a portion can be reduced.

[Evaluation 3]

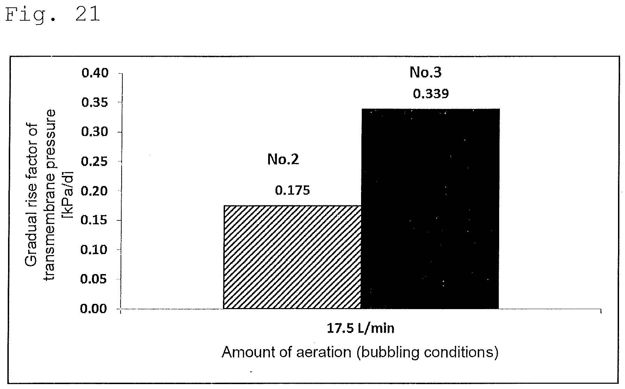

In order to examine the state of clogging of the membrane (the amount of aeration was 17.5 L per minute) in the operational conditions of each of the condition No. 2 (bacilli domination) and the condition No. 3 (standard activated sludge), in which the hollow fiber membrane (made by Mitsubishi Rayon Co. , Ltd.) was used as the kind of the membrane module, the transmembrane pressure (kPa) was measured by the sensor 10 to determine the gradual rise factor (kPa/day) thereof. The results are shown in Fig. 21.
As shown in Fig. 21, the gradual rise factor of the transmembrane pressure was significantly suppressed in the condition No. 2 in which the bacilli were dominated by adding the activator, in comparison with the condition No. 3 in which the standard activated sludge was used. Thus, it was revealed that membrane deterioration is suppressed by adding the activator to thereby dominate the bacilli also when the hollow fiber membrane was used as the kind of the membrane module in a manner similar to the case of using the flat membrane.

[Evaluation 4]

When the amount of aeration was adjusted to 12.5 L per minute in the operational conditions of each of the conditions No. 2 (the bacilli domination) and No. 3 (the standard activated sludge), in which the hollow fiber membrane (made by Mitsubishi Rayon Co., Ltd.) was used as the kind of the membrane module, membranes were clogged by insufficiency of bubbling in both on the 12th day (the 5th day after the amount of aeration was adjusted to 12.5 L per minute) from operation start in the condition No. 2, and on the 9.3rd day (the 2.3rd day after the amount of aeration was adjusted to 12.5 L per minute) from operation start in the condition No. 3 (after clogging, the membranes were exchanged). Moreover, also when the amount of aeration was adjusted to 7.5 L per minute, the membranes were clogged in both in a similar manner on the 16th day (the 2nd day after the amount of aeration was adjusted to 7.5 L per minute) from operation start in the condition No. 2, and on the 19th day (the 5th day after the amount of aeration was adjusted to be 7.5 L per minute) from operation start in the condition No. 3. Accordingly, tap water cleaning and subsequent chemical cleaning (cleaning by 2,500 ppm sodium hypochlorite liquid) were applied to the membrane after clogging, in which the amount of aeration was adjusted to 12.5 L per minute, and after each cleaning treatment, filtration resistance was measured. A relationship between the transmembrane pressure and the flux (water flow rate) as measured by the sensor 10 was plotted to calculate the filtration resistance from treated water viscosity according to the following formula.

$$[Flux] = [transmembrane\ pressure]\ /\ ([treated\ water\ viscosity] \times [filtration\ resistance]).$$

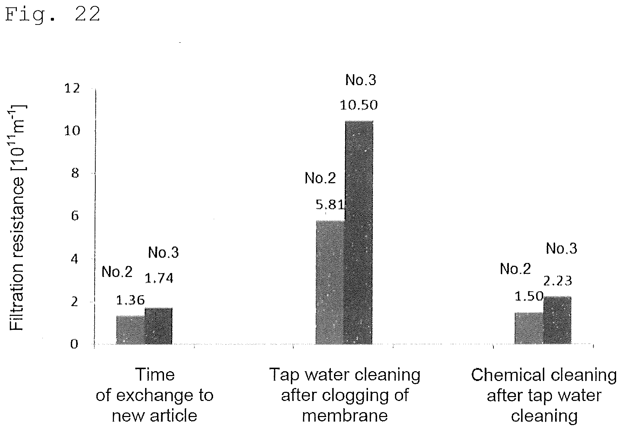

The results are shown in Fig. 22.
As shown in Fig. 22, a degree of recovery of the filtration resistance by tap water cleaning was improved in the condition No. 2 in which the bacilli were dominated by adding the activator, in comparison with the condition No. 3 in which the standard activated sludge was used. The reason was considered in such a manner that a sludge component, particularly, the SMP component (sugar, protein or the like) was degraded by an enzyme secreted by the bacilli, and adhesive strength of a membrane adherend to the membrane was reduced.

[Explanation of Numerals and Characters]

    1: Treatment tank
    2: Membrane module
    3: Suction pump

4: Sludge removal pump
5: Diffuser plate
6: Blower
7: Activator supply tank
8: Activator feed pump
9: Activator feed adjustment valve
10: Sensor
12: Measuring instrument
13: Enzyme activity measuring instrument
14: Control device
15: Operation unit
16: Output unit

**Claims**

1. A waste water treatment method for introducing waste water containing an organic substance into a treatment tank and applying activated sludge treatment thereto, and performing solid-liquid separation of waste water after the activated sludge treatment by using a separation membrane installed in the treatment tank to remove treated water, the waste water treatment method comprising adding, while dominating microorganisms for improving a state of clogging of the separation membrane, an activator containing a component for activating the microorganisms, and the activator having a particle size less than 10 $\mu$m in 30% or more of the number in total, and a particle size over 100 $\mu$m in the number less than 10% in total, to the waste water to be subjected to activated sludge treatment in the treatment tank.

2. The waste water treatment method according to claim 1, wherein the microorganisms contain *Bacillus* bacteria.

3. The waste water treatment method according to claim 1 or 2, wherein the activator contains a silicon compound with poor solubility.

4. The waste water treatment method according to claim 3, wherein the activator further contains at least one kind selected from the group consisting of an iron compound, a magnesium compound, a calcium compound and a manganese compound.

5. The waste water treatment method according to any one of claims 1 to 4, wherein the activator contains at least one kind of pulverized material selected from the group consisting of blast furnace slag, diatomaceous earth, perlite and cement.

6. The waste water treatment method according to any one of claims 3 to 5, wherein the activator is used by further combining a solubilizing agent of a silicon compound with the activator.

7. The waste water treatment method according to any one of claims 1 to 6, wherein enzyme activity derived from the microorganisms contained in the waste water in the treatment tank is measured, and an amount of addition of the activator is controlled based on a measured value thereof.

8. The waste water treatment method according to claim 7, wherein the enzyme activity is activity of protease and/or carbohydrase, and when an activity value thereof is less than a predetermined value, the activator is added thereto.

9. The waste water treatment method according to any one of claims 1 to 8, wherein the state of clogging of the separation membrane is measured, and an amount of addition of the activator is controlled based on a measured state of clogging of the separation membrane.

10. The waste water treatment method according to claim 9, wherein an indicator showing the state of clogging of the separation membrane is taken as a water pressure and/or a water flow rate of the treated water subjected to solid-liquid separation by using the separation membrane, and when a value of the water pressure and/or the water flow rate is less than a predetermined value, the activator is added thereto.

11. The waste water treatment method according to claim 9 or 10, wherein the state of clogging of the separation membrane is measured after applying backwash treatment or bubbling to the separation membrane.

12. A waste water treatment equipment for introducing waste water containing an organic substance into a treatment tank and applying activated sludge treatment thereto, and performing solid-liquid separation of waste water after the activated sludge treatment by using a separation membrane installed in the treatment tank to remove treated water, comprising:

a means for supplying an activator containing a component for activating microorganisms for improving a state of clogging of the separation membrane, and the activator having a particle size less than 10 $\mu$m in 30% or more of the number in total, and a particle size over 100 $\mu$m in the number less than 10% in total;
a means for measuring enzyme activity derived from the microorganisms contained in the waste water in the treatment tank; and
a control means for controlling an amount of supply of the activator into the waste water to be subjected to activated sludge treatment in the treatment tank based on a measured value thereof.

13. The waste water treatment equipment according to claim 12, wherein the means for measuring the enzyme activity derived from the microorganisms contained in the waste water in the treatment tank includes a means for measuring activity of protease and/or carbohydrase.

14. A waste water treatment equipment for introducing waste water containing an organic substance into a treatment tank and applying activated sludge treatment thereto, and performing solid-liquid separation of waste water after the activated sludge treatment by using a separation membrane installed in the treatment tank to remove treated water, comprising:

a means for supplying an activator containing a component for activating microorganisms for improving a state of clogging of the separation membrane, and the activator having a particle size less than 10 $\mu$m in 30% or more of the number in total, and a particle size over 100 $\mu$m in the number less than 10% in total;
a means for measuring a state of clogging of the separation membrane; and
a control means for controlling an amount of supply of the activator into the waste water to be subjected to activated sludge treatment in the treatment tank based on a measured state of clogging of the separation membrane.

15. The waste water treatment equipment according to claim 14, wherein the means for measuring the state of clogging of the separation membrane includes a means for measuring a water pressure and/or a water flow rate of the treated water subjected to solid-liquid separation by using the separation membrane.

16. The waste water treatment equipment according to any one of claims 12 to 15, wherein the microorganisms contain *Bacillus* bacteria.

17. The waste water treatment equipment according to any one of claims 12 to 16, wherein the activator contains a silicon compound with poor solubility.

18. The waste water treatment equipment according to claim 17, wherein the activator further contains at least one kind selected from the group consisting of an iron compound, a magnesium compound, a calcium compound and a manganese compound.

19. The waste water treatment equipment according to any one of claims 12 to 18, wherein the activator contains at least one kind of pulverized material selected from the group consisting of blast furnace slag, diatomaceous earth, perlite and cement.

20. The waste water treatment equipment according to any one of claims 17 to 19, wherein the activator is used by further combining a solubilizing agent of a silicon compound with the activator.

21. An activator for waste water treatment for use in dominating microorganisms for improving a state of clogging of a separation membrane in a waste water treatment method for introducing waste water containing an organic substance into a treatment tank and applying activated sludge treatment thereto, and performing solid-liquid separation of waste water after the activated sludge treatment by using the separation membrane installed in the treatment tank to remove treated water, the activator for waste water treatment, comprising a component for activating the microorganisms, and having a particle size less than 10 μm in 30% or more of the number in total, and a particle size over 100 μm in the number less than 10% in total.

22. The activator according to claim 21, wherein the microorganisms contain *Bacillus* bacteria.

23. The activator according to claim 21 or 22, containing a silicon compound with poor solubility as the component for activating the microorganisms.

24. The activator according to claim 23, further containing at least one kind selected from the group consisting of an iron compound, a magnesium compound, a calcium compound and a manganese compound as the component for activating the microorganisms.

25. The activator according to any one of claims 21 to 24, obtained by pulverizing at least one kind selected from the group consisting of blast furnace slag, diatomaceous earth, perlite and cement.

26. The activator according to any one of claims 23 to 25, for a use in combination with a solubilizing agent of a silicon compound.

27. The activator according to claim 26, wherein the solubilizing agent contains a cationic polymer for suppressing polymerization of silicon and/or a silicon compound.

Fig. 1

Fig. 2

```
                              ┌──────────────┐
                              │    Start     │
                              └──────┬───────┘
                                     │
                                     ▼
                    ┌────────────────────────────────────┐
                    │   Sampling of reaction tank water   │
                    └────────────────┬───────────────────┘
                                     │
                                     ▼
                    ┌────────────────────────────────────┐
                    │     Solid-liquid separation means   │
                    └────────────────┬───────────────────┘
                                     │
                                     ▼
                    ┌────────────────────────────────────┐
                    │       Obtaining of sample water     │
                    └────────────────┬───────────────────┘
                                     │
   Protease detection                │
         reagent  ──────────┐        │
                            ▼        ▼
                    ┌────────────────────────────────────┐
                    │          Protease reaction          │
                    └────────────────┬───────────────────┘
                                     │
                                     ▼
                    ┌────────────────────────────────────┐
                    │   Fluorescence intensity measurement │
                    └────────────────┬───────────────────┘
                                     │
                                     ▼
                    ┌────────────────────────────────────┐
                    │      Protease activity operation    │
                    └────────────────────────────────────┘
```

Fig. 3

```
                          ┌─────────────┐
                          │    Start    │
                          └──────┬──────┘
                                 │
                                 ▼
              ┌──────────────────────────────────────┐
              │   Sampling of reaction tank water     │
              └──────────────────┬───────────────────┘
                                 │
                                 ▼
              ┌──────────────────────────────────────┐
              │     Solid-liquid separation means     │
              └──────────────────┬───────────────────┘
                                 │
                                 ▼
              ┌──────────────────────────────────────┐
              │       Obtaining of sample water       │
              └──────────────────┬───────────────────┘
                                 │
   Starch solution ──────┐       │
                         ▼       ▼
              ┌──────────────────────────────────────┐
              │       Starch degradation reaction     │
              └──────────────────┬───────────────────┘
                                 │
   Iodine liquid ───────┐        │
                        ▼        ▼
              ┌──────────────────────────────────────┐
              │          Iodo-starch reaction         │
              └──────────────────┬───────────────────┘
                                 │
                                 ▼
              ┌──────────────────────────────────────┐
              │         Absorbance measurement        │
              └──────────────────┬───────────────────┘
                                 │
                                 ▼
              ┌──────────────────────────────────────┐
              │        Amylase activity operation     │
              └──────────────────────────────────────┘
```

Fig. 4

Fig. 4A

15

14

Signal in corresponding to
water pressure or water
flow value of treated
water in sensor 10

Signal in
corresponding to
judgement of time of
activating
microorganisms to
improve state of
clogging

Output to activator
feed pump 8 or valve
9

16

Fig. 4B

15

14

Signal in corresponding
to measured value of
enzyme activity in
enzyme activity
measuring device 13

Signal in
corresponding to
judgement of time of
activating
microorganisms to
improve state of
clogging

Output to activator
feed pump 8 or valve
9

16

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

**EP 3 456 689 A1**

## INTERNATIONAL SEARCH REPORT

International application No.

PCT/JP2017/016647

A. CLASSIFICATION OF SUBJECT MATTER

*C02F3/12*(2006.01)i, *B01D65/02*(2006.01)i, *B01D65/08*(2006.01)i, *C02F1/44*(2006.01)i, *C02F3/00*(2006.01)i

According to International Patent Classification (IPC) or to both national classification and IPC

B. FIELDS SEARCHED

Minimum documentation searched (classification system followed by classification symbols)
B01D61/00-71/82, C02F1/44, C02F3/00-3/34

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2012-005924 A (Keiichiro ASAOKA), 12 January 2012 (12.01.2012), claims; paragraphs [0011] to [0071]; fig. 1 (Family: none) | 1-27 |
| Y | JP 2013-510710 A (Novozymes Biologicals, Inc.), 28 March 2013 (28.03.2013), claims; paragraph [0026] & US 2011/0110894 A1 claims; paragraph [0029] & AR 78963 A1      & CA 2780118 A1 & CN 102712512 A    & EP 2499098 A1 & TW 201121898 A    & WO 2011/059963 A1 & ZA 201203544 B | 1-27 |

|☒| Further documents are listed in the continuation of Box C. | |☐| See patent family annex. |
|---|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 30 June 2017 (30.06.17) | 11 July 2017 (11.07.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2017/016647 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2006-334587 A  (Nalco Co.),<br>14 December 2006 (14.12.2006),<br>claims; examples<br>& US 2006/0272198 A1<br>claims; examples<br>& AR 54976 A1          & AU 2005332342 A1<br>& BR PI0503711 A      & CA 2610081 A1<br>& CA 2903725 A1       & CN 1872734 A<br>& EP 1885656 A1       & EP 1734011 A1<br>& IL 170010 A         & KR 10-2006-0125443 A<br>& MX PA05008707 A     & MY 150868 A<br>& NO 20053729 A       & NZ 563531 A<br>& RU 2007145645 A     & SG 128537 A1<br>& TW 200642969 A      & WO 2006/130163 A1<br>& ZA 200506536 A | 6,20,26-27 |
| Y | JP 58-074196 A  (Calgon Corp.),<br>04 May 1983 (04.05.1983),<br>claims<br>& EP 75514 A1<br>claims<br>& AU 8838182 A | 6,20,26-27 |
| Y | JP 11-319516 A  (NKK Corp.),<br>24 November 1999 (24.11.1999),<br>paragraph [0025]<br>(Family: none) | 11 |
| Y | JP 2004-298703 A  (Kubota Corp.),<br>28 October 2004 (28.10.2004),<br>paragraph [0032]<br>(Family: none) | 11 |
| A | JP 2007-260664 A  (Toray Industries, Inc.),<br>11 October 2007 (11.10.2007),<br>claims<br>(Family: none) | 1-27 |
| A | JP 7-124584 A  (Tsutomu NISHIMURA),<br>16 May 1995 (16.05.1995),<br>claims<br>(Family: none) | 1-27 |
| A | JP 3-178395 A  (Nippon Steel Corp.),<br>02 August 1991 (02.08.1991),<br>claims<br>(Family: none) | 1-27 |

Form PCT/ISA/210 (continuation of second sheet) (January 2015)

## REFERENCES CITED IN THE DESCRIPTION

**Patent documents cited in the description**

- JP 2007260664 A
- JP 2013510710 A
- JP 4826982 B
- WO 2011136188 A

**Non-patent literature cited in the description**

- *Journal of Environmental Biotechnology,* 2011, vol. 11 (1·2), 47-53
- *The 65th Annual Meeting of The Society for Biotechnology,* 221